# EUROPEAN PATENT APPLICATION

(11) **EP 1 246 440 A1**
(43) Date of publication of application: **02.10.2002**
(21) Application number: 00949978.1
(22) Date of filing: 03.08.2000
(51) Int. Cl.: H04M 3/51, H04M 3/42, H04M 3/523, H04M 3/60, H04Q 3/58, G06F 17/60

(54) **METHOD AND DEVICE FOR CALL CENTER OPERATION**

(30) Priority: 21.12.1999 JP 36338799; 01.05.2000 JP 2000132063
(71) Applicant: Kawasaki Steel Systems R & D Corporation, Tokyo 136-8582 (JP)
(72) Inventor: YOSHIZAWA, Isao Kawasaki Steel Systems R & D Corp., Koto-ku, Tokyo 136-8582 (JP); UEHARA, Kenichiro Kawasaki Steel Sys. R & D Corp., Koto-ku, Tokyo 136-8582 (JP); SAKURADA, Kazuyuki Kawasaki Steel Sys. R & D Corp., Koto-ku, Tokyo 136-8582 (JP)
(74) Representative: Sunderland, James Harry
(86) International application number: JP0005216
(87) International publication number: WO01047227

(57) **Abstract**

A multi-call-center operations system is provided with a collective operator management device for determining an increase or a decrease in the number of operators in charge of outbound service at each of call centers and for transferring the resulting determination to an associated call center, and collectively manages at one location the number of operators in charge of outbound service at a plurality of call centers.

The human resource of a call center and the facility resource dependent also on the number of operators are effectively used. Databases are also efficiently maintained and toll charges for calls to customers are minimized, thereby minimizing the overall cost of operating the call center.

## Description

### TECHNICAL FIELD

The present invention relates to a call center operations system. More particularly, first to third inventions of the present application relate to a multi-call-center operations system where a plurality of operators are in charge of outbound service for handling outgoing calls to customers and inbound service for handling incoming calls from customers. More particularly, the first to third inventions relate to a multi-call-center operations method, the multi-call-center operations system, and a computer readable storage medium having a computer program stored thereon, the computer program being related to the multi-call-center operations system, all of which serve to make effective use of the human resource of a call center and the facility resource dependent also on the number of operators, and efficiently maintain databases and minimize toll charges for calls to customers, thereby minimizing the overall cost of operating the call center.

Fourth to seventh inventions of the present application relate to a remote agent system and more particularly, to a remote agent operations method, a remote agent device, and a computer readable storage medium having a computer program stored thereon, the computer program being related to the remote agent device, all of which allow operators working for a call center to service customers to be located remotely for outbound service, making it possible to improve the operation efficiency of the call center and reduce the cost of operating the call center.

Eighth to tenth inventions of the present application relate to a call center operations method, a call center operations apparatus, and a computer readable storage medium having a computer program stored thereon, the computer program being related to the call center operations apparatus, all of which improve the degree of freedom in combination of facilities utilized in a call center, thereby facilitating the installation of new facilities or changing the layout of facilities. This can facilitate utilizing existing facilities in combination with newly introduced facilities when new functions are added to the call center, thereby reducing the amount of newly added facilities by making effective use of the existing facilities. It is thereby made possible to reduce the overall cost of operating the call center.

### BACKGROUND ART

For example, concerning outbound service for handling outgoing calls to customers, disclosed in Japanese Patent Laid-Open Publication No. Hei. 8-46699 is a technique by which the number of outgoing calls is set appropriately in response to circumstances as required in order to effectively reduce the idle time of operators, thereby improving the efficiency of service.

In addition, there are cases where such outbound service and inbound service for handling incoming calls from customers is operated at a plurality of call centers having a plurality of operators.

A call center system is largely divided into inbound service and outbound service.

The inbound service is to receive customer-initiated calls and other calls. In the inbound service, facsimile and electronic mail are also received in addition to telephone calls. Accordingly, utilized are operators, voice response devices, facsimile machines, and electronic mail related devices.

In Japanese Patent Laid-Open Publications No. Hei. 6-291877 and No. Hei. 11-317817, disclosed is a technique which allows operators working for a call center to service customers to be located remotely for inbound service.

Here, in the call center, used are various devices and apparatus such as a CTI device or a voice response device in addition to a PBX.

However, first, conventionally exists a following problem. That is, in the form of operating such a plurality of call centers, there is a case where different PBXs (Private Branch eXchange) are employed among the call centers. In addition, to implement a predictive calling function, it is necessary to employ a dedicated predictive dialer device in the PBX.

For this reason, the outbound service is generally provided independently among respective call centers. In addition, for particular outbound services to be provided at a plurality of call centers, the services are fixedly pre-assigned to respective call centers.

Thus, conventional techniques do not flexibly respond to variations in human and facility resources at each call center. For this reason, valuable resources such as these human and facility resources have not been used effectively.

Now, secondly, conventionally exists a following problem. That is, these techniques are not intended for outbound service but limited only to inbound service, regardless of the size of remotely located call centers, a small remote call center at home or a relatively large call center having a plurality of operators.

Here, the outbound service is to handle outgoing calls from call centers.

For the outgoing calls, use is made of the predictive calling function typical of the predictive calling and the preview calling function for an operator to confirm a called receiver and then provide calling service through the intention of the operator.

The predictive calling is to automatically dial, based on information containing the list of the customers to be called, and then successively provide outgoing calls while the idleness of operators to be connected to the outgoing calls is being predicted statistically. Thus, the idle time of operators is shortened, thereby improving the efficiency for operators to service customers.

In addition, there is also a system provided with an inbound function for receiving only inbound calls from customers, and with a blend function that can perform both services of the predictive calling function and the inbound function. Incidentally, hereinafter referred to as the blend function service is a service that makes use of the function.

Now, thirdly, conventionally exists a following problem. That is, in a call center already in service, for example, there is a case where facilities such as a predictive dialer device are additionally provided. In a call center already in service, there is also a case where other system is notified of the operation status.

Conventionally, in such a case, it was impossible to collectively manage operators and the connective operation between the additionally introduced predictive calling device and the call center already in operation, for example, the forwarding of a call with data between operators using the predictive calling device and those working in the call center already in operation. In addition, in the call center, other system cannot be notified of the state of operation, thus making it difficult to integrally manage a plurality of call centers.

### DISCLOSURE OF THE INVENTION

The invention of the present application has been developed to solve the aforementioned conventional problems. It is therefore a first object to provide a multi-call-center operations system which serves to make effective use of the human resource of a call center and the facility resource dependent also on the number of operators, and efficiently maintain databases and minimize toll charges for calls to customers, thereby minimizing the overall cost of operating the call center.

In addition, it is a second object of the invention of the present application to provide a remote agent system which allows operators working for a call center to service customers to be located remotely for outbound service, making it possible to improve the operation efficiency of the call center and reduce the cost of operating the call center.

In addition, it is a third object of the invention of the present application to provide a call center operations system which improves the degree of freedom in combination of facilities utilized in a call center, thereby facilitating the installation of new facilities or changing the layout of facilities. This can facilitate utilizing existing facilities in combination with newly introduced facilities when new functions are added to the call center, thereby reducing the amount of newly added facilities by making effective use of the existing facilities. It is thereby made possible to reduce the overall cost of operating the call center.

First, a multi-call-center operations method according to the first invention of the present application achieves the aforementioned first object, by arranging such that across a plurality of call centers where a plurality of operators are in charge of outbound service for handling outgoing calls to customers and inbound service for handling incoming calls from customers, the number of operators in charge of outbound service at each call center is centrally controlled at one operator management unit, and the operator management unit instructs each call center to increase or decrease the number of operators in charge of the outbound service.

In addition, in the multi-call-center operations method according to the first invention, a predictive calling function available irrespective of the type of a local switching system provided at each of the call centers is operated in the call centers. This facilitates changing the assignment of customers among call centers in the outbound service that employs the predictive calling function.

Furthermore, in the multi-call-center operations method according to the first invention, across a plurality of target call centers, at least part of information regarding a customer to be handled in outbound service and inbound service including at least the name of the customer and the telephone number of the customer are collectively managed. This allows the database to be maintained centrally, which would otherwise require time and cost in terms of software and hardware, thereby providing savings in labor and reduction in cost.

In addition, in the multi-call-center operations method according to the first invention, in consideration of toll charge from a call center to a customer, customers included in the customer information and to be handled in outbound service are assigned to a respective call center, and customer information regarding an assigned customer can be referenced at a call center having the customer information assigned thereto. This allows toll charge to be reduced, thereby reducing costs.

Now, the multi-call-center operations system according to the second invention of the present application achieves the aforementioned first object, by an operator number management table for storing the number of operators in charge of outbound service at each call center, the number of operators being received from a plurality of call centers where a plurality of operators are in charge of outbound service for handling outgoing calls to customers and inbound service for handling incoming calls from customers; and an collective operator management device for determining an increase or a decrease in the number of operators in charge of outbound service at each of the call centers to transmit the resulting determination to an associated call center. Incidentally, it is also possible to substantially implement the aforementioned collective operator management device with a computer program.

Furthermore, the computer readable storage medium according to the third invention of the present application achieves the aforementioned first object, by providing a computer readable storage medium having a computer program stored thereon, the computer program for implementing the collective operator management device set forth in the aforementioned second invention.

Now, the operation of the first to third inventions of the present application is briefly explained below.

There may be such a case where a plurality of call centers are operated in which a plurality of operators are in charge of outbound service for handling outgoing calls to customers and inbound service for handling incoming calls from customers.

In such a case, in the present invention, across a plurality of call centers, the number of operators in charge of outbound service at each call center is centrally controlled at one operator management unit. In addition, the operator management unit instructs each call center to increase or decrease the number of operators in charge of the outbound service.

In this context, according to the first to third inventions of the present application, it is possible to flexibly respond to variations in human and facility resource of individual call centers. Accordingly, it is possible to make effective use of the human resource of a call center and the facility resource dependent also on the number of operators, and efficiently maintain databases and minimize toll charges for calls to customers, thereby minimizing the overall cost of operating the call center.

Upon introduction of hardware, the type of the hardware is selected in terms of various aspects such as prices, purchase conditions, and maintenance conditions. For this reason, different call centers may introduce different types of hardware.

In addition, conventionally, it is likely to introduce predictive dialer devices and other accessory devices of the same maker as their main body. This in turn may cause different call centers to introduce different types of accessory devices. Using predictive dialer devices of different specifications among call centers would make it difficult to share information regarding customers to be targeted in outbound service between call centers.

To apply the first to third inventions of the present application under these circumstances, it is acceptable to introduce predictive dialer devices of the common specification across a plurality of call centers. It is also possible to implement the predictive dialer device in a software-wise manner with a computer program, while introducing a new predictive dialer device of a particular specification would cause relatively less from the viewpoint of cost.

Now, the remote agent operations method according to the fourth invention of the present application achieves the aforementioned second object, by arranging such that a telephone for enabling calls via the public switched telephone network and a computer device connectable to a wide area network are located at a remote agent; if the telephone can be used to service a customer, a remote operator at a remote agent logs in to a remotely located Web server device; then, to provide outbound service, a call connected to a customer called using an automatic dialer device is connected to the telephone; and customer information regarding the connection is forwarded to the computer device to indicate the customer information to the remote operator.

In addition, in the remote agent operations method, a program, operated in the computer device, for use with the logging-in activity and for displaying the customer information is downloaded from the Web server device. On the part of the remote agent, for example, this eliminates the need not only for a capacity of a hard disk device to store these programs but also for management of these programs such as updating.

Incidentally, it is also possible to conduct such downloading through the Internet or other WAN (Wide Area Network) at a Web server device or the like. In addition, in such downloading, on the part of the computer device at a remote agent, use may be made, for example, of a typical browser program such as the "Internet Explorer" of Microsoft in USA.

Now, the remote agent device according to the fifth invention of the present application achieves the aforementioned second object, by comprising a telephone for allowing a remote operator at a remote agent to service a customer via the public switched telephone network by placing a call using a dialer device to provide outbound service; and a computer device for use with a logging-in activity to a remotely located Web server device and for receiving customer information regarding a customer to be serviced from a remote location for display in order to provide the service, the computer device being able to connect to a wide area network, in which the remote agent device is located at the remote agent.

Furthermore, in the remote agent device, the telephone is implemented by a voice call interface device, incorporated in the computer device, for connecting to the public switched telephone network; and a headset to be put on the head of a remote operator and connected to the voice call interface device, the headset comprising a microphone device for use with an outgoing call to a customer and a loudspeaker device for use with an incoming call from a customer. This makes it possible to integrate the devices that are installed at the remote agent. This thereby allows for saving the space for installation and providing savings in labor at the time of installing devices at the remote agent, such as in connecting between a telephone and a computer or an operator terminal.

In addition, in the remote agent device, the telephone may be an Internet telephone. For example, in a case where a switching system such as a PBX (Private Branch eXchange) for connecting to customers or an intra-station switch is always kept connected to the remote agent, this makes it possible to reduce toll charge between these switches and the remote agent.

Furthermore, the remote call center apparatus according to the sixth invention of the present application achieves the aforementioned second object, by arranging such that a local switching system, a telephone connected to the local switching system, and an operator terminal operated by a human operator are prepared at each of a plurality of call centers; and an automatic dialer device at one location can simultaneously provide outgoing calls to each of the plurality of call centers via a wide area network. Incidentally, the local switching system includes a PBX.

Furthermore, the computer readable storage medium according to the seventh invention of the present application achieves the aforementioned second object, by providing a computer readable storage medium having a computer program stored thereon, the computer program for implementing the remote agent device set forth in the aforementioned fifth invention or the remote call center apparatus set forth in the aforementioned sixth invention.

Incidentally, in the aforementioned fourth to seventh inventions and the eighth to tenth inventions to be described later, the wide area network is not limited to a typical WAN. That is, it may be a network for connecting between devices located at different stations. For example, it includes a network for connecting between devices, such as different local switching systems, located at different stations. Accordingly, the wide area network of the present invention includes those employing a dedicated line, the public switched telephone network, the Internet, and their combinations.

Now, the operation of the fourth to seventh inventions of the present application is briefly explained below.

In the present invention, a telephone enabling calls through the public switched telephone network and a computer device connectable to a wide area network are installed at the remote agent. The computer device may be a so-called personal computer. In addition, in the present invention, it is not always necessary to install a switching system such as a PBX at the location of the remote agent.

When the telephone can be used to service customers, a remote operator at the remote agent logs in to a remotely located Web server device. The customer is the person to be serviced by the operator or to be handled in the outbound service. The remote location is at least different from where the remote agent is located. In addition, the Web server device is capable of providing information to the computer device of the remote agent via the Internet or other paths such as other WAN. To acquire such information, on the part of the computer device, use may be made, for example, of a typical browser program such as the "Internet Explorer" of Microsoft in USA.

Then, to provide outbound service, a call connected to a customer called using an automatic dialer device is connected to the telephone at the remote agent. In conjunction with this, customer information regarding the connection is forwarded to the computer device of the remote agent to indicate the customer information to the remote operator. As the automatic dialer device, use may be made of those that can implement the preview calling function or the predictive calling. In addition, the connection with a customer may be provided by a switching system such as a PBX or an intra-station switch. For example, in the embodiment to be described later, the switch is a PBX 116 or a intra-station switch 172.

Thus, according to the fourth to seventh inventions of the present application, for outbound service, operators working for a call center to service a customer can also be located remotely, thereby making it possible to improve the operation efficiency of the call center and reduce the cost of operating the call center.

Incidentally, the agent in the fourth to seventh inventions of the present application and in the eighth to tenth inventions to be described later is a combination of an operator and a facility that the operator uses. In addition, in the present invention, the remote agent is an agent located at a place different from where a switching system such as a PBX or an intra-station switch for connecting to a customer is located. Accordingly, as in the embodiments to be described later, the remote agent includes not only a home agent, located at a place different from where the PBX 116 or the intra-station switch 172 is located, but also an agent at a remotely located call center 110.

Now, the call center operations method according to the eighth invention of the present application achieves the aforementioned third object, by arranging such that with either the extension number of a respective telephone connected to a PBX or an ACD number managed by the PBX being pre-registered, a PBX information collecting and routing control device for receiving from the PBX and collecting either information indicative of the state of a telephone connected to the PBX or information indicative of the state of an ACD queue is used; and if at least either the state of the telephone or the state of the ACD queue has changed, the PBX information collecting and routing control device sends a change-of-state notification indicative of the change to other external device.

In addition, in the call center operations method, used is a CTI device for forwarding a connected call by controlling a PBX and for providing information regarding the connected call for an operator using a telephone connected to the PBX. Also used is a calling control unit for giving the PBX a direction for providing an outgoing call to a called telephone number stored in a database in accordance with the change-of-state notification. This allows the calling control unit to control the outgoing call, and when once the call is connected, the CTI device controls the connected call. Thus, the function that the CTI device does not have can be implemented using the PBX information collecting and routing control device.

In the call center operations method, software used for connection with the PBX and included in a configuration of the PBX information collecting and routing control device, and software used for connection with the PBX and included in a configuration of the calling control unit are implemented in the form of a module, respectively. This facilitates applying the present invention to various PBXs. That is, corresponding to a PBX, it is possible to additionally fabricate only such a module portion or incorporate an existing portion, if any, thereby facilitating it to cope with various PBXs.

Now, the call center operations apparatus according to the ninth invention of the present application achieves the aforementioned third object, by comprising a PBX information collecting and routing control device, with either the extension number of a respective telephone connected to a PBX or an ACD (Automatic Call Distribution) number managed by the PBX being pre-registered, for receiving either information indicative of the state of the telephone or information indicative of the state of an ACD queue from the PBX and for sending a change-of-state notification indicative of the change if at least either the state of the telephone or the state of the ACD queue has changed; a calling control unit for giving the PBX a direction for providing an outgoing call to a called telephone number stored in a database in accordance with the change-of-state notification; and a CTI device for forwarding a connected call by controlling a PBX and for providing information regarding the connected call for an operator using a telephone connected to the PBX.

Furthermore, the computer readable storage medium according to the tenth invention of the present application achieves the aforementioned third object, by providing a computer readable storage medium having a computer program stored thereon, the computer program for implementing the call center operations apparatus set forth in the ninth invention.

Now, the operation of the eighth to tenth inventions of the present application is briefly explained below.

In the present invention, employed as a facility at a call center is a so-called PBX information collecting and routing control device in conjunction with the CTI device, for example. In the PBX information collecting and routing control device, at least either the extension number of a respective telephone connected to a PBX or an ACD number managed by the PBX is pre-registered. The ACD number is the name of identity such as of a telephone to which calls are distributed. In addition, the PBX information collecting and routing control device receives from the PBX and collects at least either information indicative of the state of a telephone connected to the PBX or information indicative of the state of an ACD queue. Then, if at least either the state of the telephone or the state of the ACD queue has changed, the PBX information collecting and routing control device sends a change-of-state notification indicative of the change to other external device.

For example, the other external device includes, but not limited by the present invention to, a CTI device with no particularly designated specification (hereinafter referred to as a separately specified CTI device). For example, included is a CTI device of a different make.

Incidentally, the aforementioned state of the telephone includes various states, but not limited to any particular state by the present invention. For example, the state of the telephone includes various states in a call center. For example, included are the states of a operator attending at the telephone, such as logging-in, logging-out, or not seated. In addition, the state of the telephone includes "receivable" or "non-receivable" states, regardless of its cause. Furthermore, included in the state of the telephone is the state of call on the telephone such as "calling" or "talking".

Incidentally, the aforementioned ACD queue is a queue for a connection to be distributed to the telephone of an operator, the connection having been provided to a customer but not to the telephone of the operator. Thus, for example, the state of the ACD queue includes whether or not the queue is vacant for distribution or average queue time. However, whatever the state of the ACD queue, the present invention does not specifically limit it.

Here, for example, the aforementioned PBX information collecting and routing control device is added to a call center or contact center where a separately specified CTI device is in operation. This makes it possible to collect the change-of-state information of the PBX controlled by the separately specified CTI device, the telephone connected to the PBX, the ACD queue managed by the PBX, and a voice response device connected to the PBX, and route the resulting collection to other system. However, with the PBX information collecting and routing control device, it is necessary to pre-register the information regarding the PBX controlled by the separately specified CTI device, the telephone connected to the PBX, the ACD number managed by the PBX, and the extension number of the voice response device connected to the PBX.

Alternatively, for example, it is possible to use a CTI device (a separately specified CTI device 310 in the embodiments described later) for forwarding a connected call by controlling a PBX and for providing information regarding the connected call for an operator using a telephone connected to the PBX. It is also possible to use a calling control unit for giving the PBX a direction for providing an outgoing call to a called telephone number stored in a database in accordance with the change-of-state notification sent by the PBX information collecting and routing control device. In this case, the calling control unit can control the outgoing call, and when once the call is connected, the CTI device can control the connected call.

At the time of making a call, it is possible to make use of the predictive dialer function, for example, to transmit a calling command (a CTI command) to the PBX while performing control on pacing.

As described above, the aforementioned calling control unit is provided separately from the CTI device (a separately specified CTI device 310 in the embodiments described later). Even in a case where the CTI device, the PBX, and the automatic calling device provided with the predictive dialer function are of different make, with at least part of their specifications being different from each other including interface specifications for interconnection, it is still possible to combine them for use.

As described above, according to the eighth to tenth inventions of the present application, the degree of freedom in combination of facilities utilized in a call center such as a CTI device, a PBX, and an automatic calling device can be improved, thereby facilitating the installation of new facilities or changing the layout of facilities. This can facilitate utilizing existing facilities in combination with newly introduced facilities when new functions are added to the call center, thereby reducing the amount of newly added facilities by making effective use of the existing facilities. It is thereby made possible to reduce the overall cost of operating the call center.

### BRIEF DESCRIPTION OF THE DRAWINGS

FIG. 1 is a block diagram of an overall configuration illustrating a usage pattern of a multi-call-center operations apparatus according to a first embodiment to which the present invention is applied;
FIG. 2 is a block diagram of an overall configuration illustrating a modified example of the usage pattern of the aforementioned multi-call-center operations apparatus;
FIG. 3 is a block diagram illustrating the configuration of a call center apparatus according to the first embodiment;
FIG. 4 is a block diagram illustrating the configuration of the multi-call-center operations apparatus and a CTI server device according to the aforementioned first embodiment;
FIG. 5 is an explanatory block diagram illustrating the operation of the aforementioned first embodiment;
FIG. 6 is a flowchart illustrating the processing of collective operator management in the multi-call-center according to the aforementioned first embodiment;
FIG. 7 is a flowchart illustrating the processing of database management according to the aforementioned first embodiment;
FIG. 8 is a view of a data structure illustrating an operator number management table according to the aforementioned first embodiment;
FIG. 9 is a view of a data structure illustrating a call center management table according to the aforementioned first embodiment;
FIG. 10 is a view of a data structure illustrating an area code information management table according to the aforementioned first embodiment;
FIG. 11 is a view of a data structure illustrating information being passed between a CTI control device and a collective operator management device according to the aforementioned first embodiment;
FIG. 12 is a view of a data structure illustrating information being passed between a pacing control device and a database management device according to the aforementioned first embodiment;
FIG. 13 is a block diagram illustrating the configuration of a second embodiment to which the present invention is applied;
FIG. 14 is a block diagram illustrating the configuration of a predictive dialer device to be used with the aforementioned embodiment;
FIG. 15 is a block diagram illustrating the configuration of a third embodiment to which the present invention is applied;
FIG. 16 is a block diagram illustrating the configuration of a first example of a home agent device to be used with the aforementioned third embodiment;
FIG. 17 is a block diagram illustrating the configuration of a second example of a home agent device to be used with the aforementioned third embodiment;
FIG. 18 is a block diagram illustrating the configuration of a third example of a home agent device to be used with the aforementioned third embodiment;
FIG. 19 is a block diagram illustrating the configuration of a fourth embodiment to which the present invention is applied;
FIG. 20 is a block diagram illustrating the configuration of a predictive dialer engine to be used with the aforementioned fourth embodiment;
FIG. 21 is a block diagram illustrating the configuration of a fifth embodiment to which the present invention is applied;
FIG. 22 is a block diagram illustrating the flow of a signal to explain the operation of the aforementioned first to fifth embodiments;
FIG. 23 is a diagram illustrating a login window according to the aforementioned first to fifth embodiments;
FIG. 24 is a diagram illustrating a first reception window according to the aforementioned first to fifth embodiments;
FIG. 25 is a diagram illustrating a second reception window according to the aforementioned first to fifth embodiments;
FIG. 26 is a diagram illustrating a contact history window according to the aforementioned first to fifth embodiments;
FIG. 27 is a diagram illustrating a contact result window according to the aforementioned first to fifth embodiments;
FIG. 28 is a block diagram illustrating the configuration of a sixth embodiment to which the present invention is applied;
FIG. 29 is a block diagram illustrating the configuration of a seventh embodiment to which the present invention is applied;
FIG. 30 is a block diagram illustrating the configuration of an eighth embodiment to which the present invention is applied;
FIG. 31 is a block diagram illustrating the flow of a signal to explain the operation of the aforementioned fifth to eighth embodiments;
FIG. 32 is a block diagram illustrating the configuration of a ninth embodiment to which the present invention is applied;
FIG. 33 is a block diagram illustrating the configuration of a modified example according to the ninth embodiment;
FIG. 34 is a block diagram illustrating the configuration of an automatic calling control device to be used with the ninth embodiment;
FIG. 35 is a block diagram illustrating the configuration of a tenth embodiment to which the present invention is applied;
FIG. 36 is a block diagram illustrating the configuration of an automatic calling control device to be used with the tenth embodiment;
FIG. 37 is a block diagram illustrating the configuration of an eleventh embodiment to which the present invention is applied;
FIG. 38 is a block diagram illustrating the configuration of an automatic calling control device to be used with the eleventh embodiment;
FIG. 39 is a block diagram illustrating the configuration of a twelfth embodiment to which the present invention is applied;
FIG. 40 is a block diagram illustrating the configuration of a PBX information collecting and routing control device to be used with the twelfth embodiment;
FIG. 41 is a block diagram illustrating the configuration of a thirteenth embodiment to which the present invention is applied;
FIG. 42 is a sequence diagram illustrating a working example in which an automatic calling function is additionally provided in the ninth to eleventh embodiments, the thirteenth embodiment according to the aforementioned twelfth embodiment; and
FIG. 43 is another sequence diagram to be continued from FIG. 42.

### BEST MODE TO CARRY OUT THE INVENTION

The embodiments of the present invention will be described below in detail with reference to the drawings.

Now, the first to third inventions of the present application are described in detail in accordance with the embodiments.

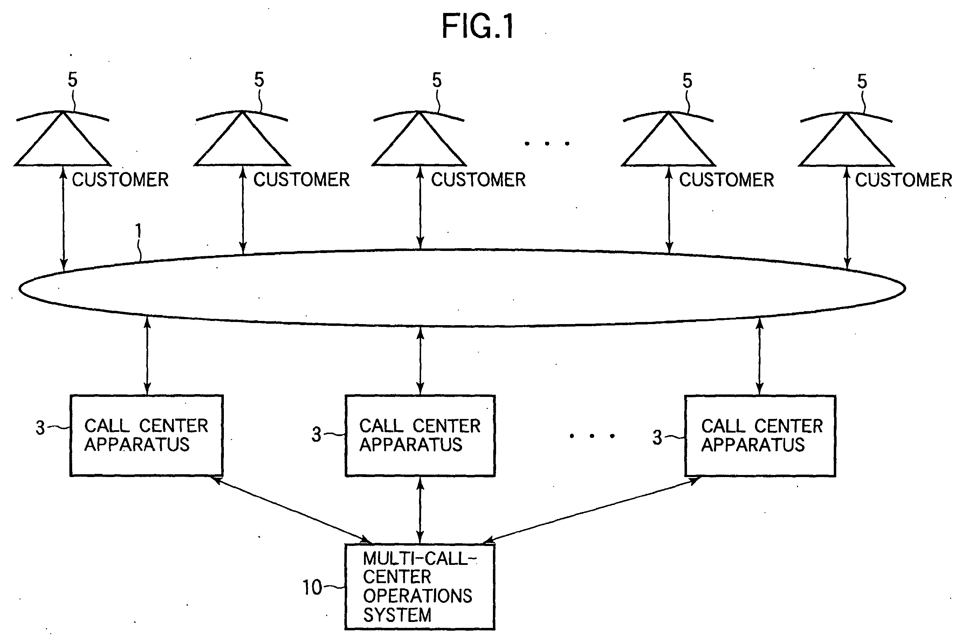

FIG. 1 is a block diagram of an overall configuration illustrating a usage pattern of a multi-call-center operations system 10 according to a first embodiment to which the first to third inventions of the present application have been applied.

In this figure, conducted in a call center provided with a call center apparatus 3 are outbound service for handling outgoing calls to a customer telephone 5 over a public switched telephone network 1 and inbound service for handling incoming calls from the customer telephone 5 over the public switched telephone network 1. In the call center, a plurality of operators provide outbound and inbound services.

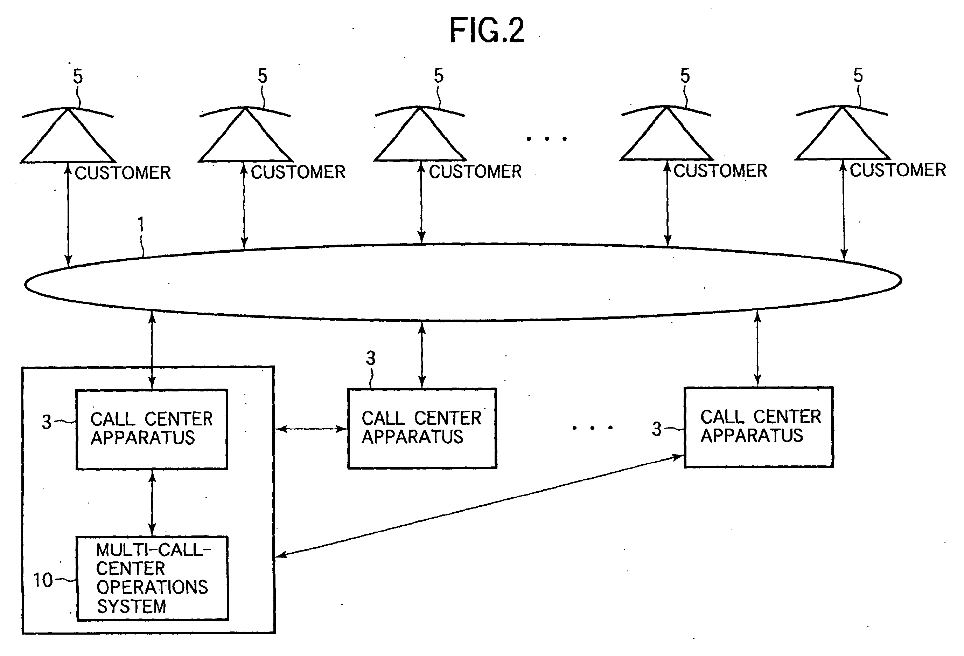

Furthermore, a multi-call-center operations system 10 is connected with a plurality of these call center apparatus 3. Incidentally, FIG. 2 shows a modified example of this embodiment. As shown in FIG. 2, the multi-call-center operations system 10 may be configured in combination with any one of the call center apparatus 3.

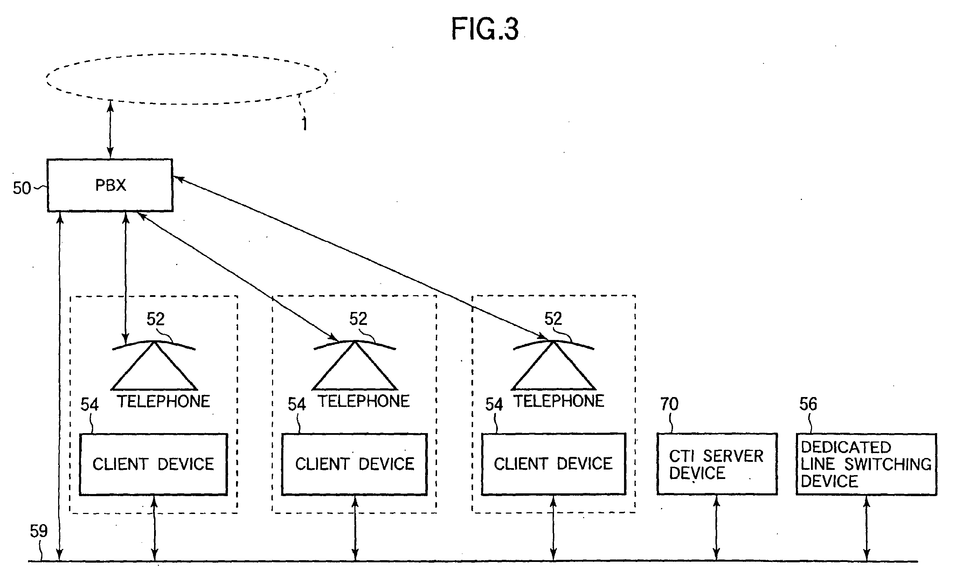

FIG. 3 is a block diagram illustrating the configuration of the call center apparatus 3 according to this embodiment.

In this figure, the call center apparatus 3 installed in a call center is provided with a PBX 50; a plurality of telephones 52 and a plurality of client devices 54 which are provided for individual operators; a CTI (Computer Telephony Integration) server device 70; and a dedicated switching device 56 for providing connections to the multi-call-center operations system 10. In addition, the PBX 50, the plurality of client devices 54, the CTI server device 70, and the dedicated switching device 56 are interconnected over a LAN (Local Area Network) 59.

In such a call center, conducted is the so-called outbound service for calling from the call center to the customer telephone 5 using an operator predictive calling function.

That is, the predictive calling function serves to automatically dial customer telephone numbers for calling. Then, when the outgoing call is connected to the customer over the public switched telephone network 1, the PBX 50 connects the call to a telephone 52 of an operator in the call center. Simultaneously, information on the customer of the call such as the caller's number is sent from the CTI server device 70 to the client device 54 at the operator and then displayed on the screen of the client device 54.

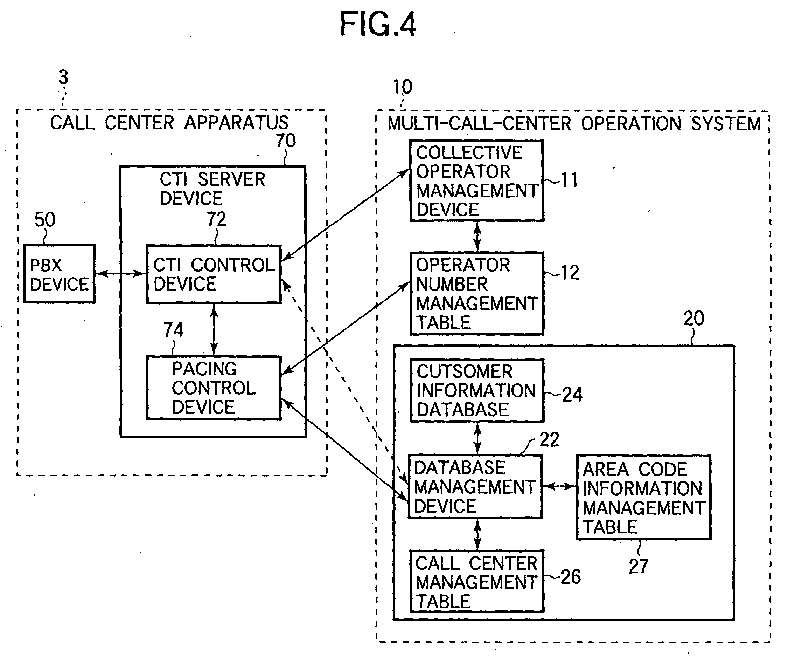

FIG. 4 is a block diagram illustrating the configuration of the multi-call-center operations system 10 and the CTI server device 70 according to this embodiment.

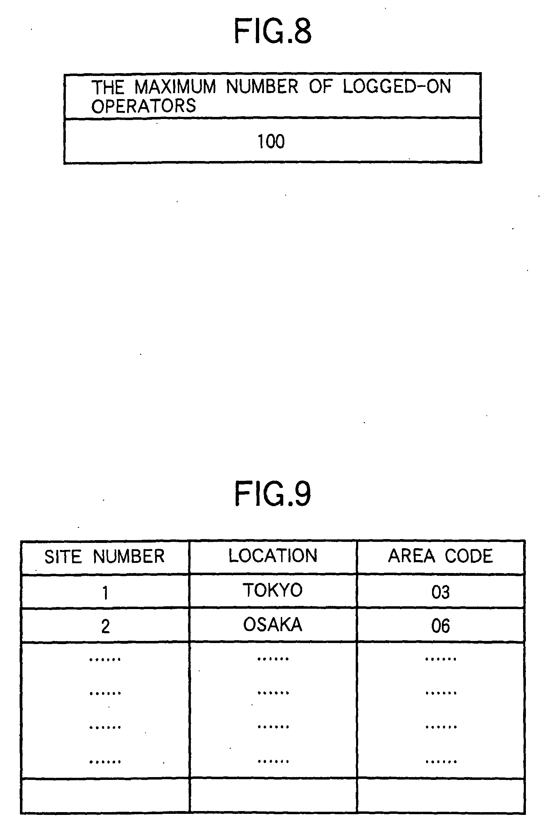

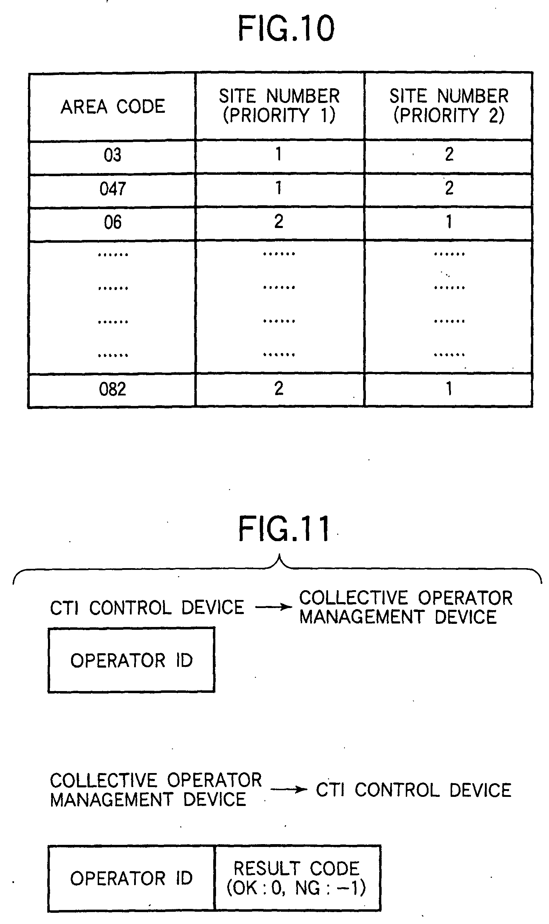

In FIG. 4, the multi-call-center operations system 10 has a collective operator management device 11 and a database management device 22. The multi-call-center operations system 10 also has an operator number management table 12, shown in FIG. 8, which is used in the collective operator management device 11. Furthermore, the multi-call-center operations system 10 has a customer information database 24 which is handled by a database management device 22, a call center management table 26 shown in FIG. 9, and an area code information management table 27 shown in FIG. 10.

The CTI server device 70 comprises a CTI control device 72 and a pacing control device 74. The aforementioned pacing control device 74 also has a predictive dialer device. Here, the PBX 50 and the CTI server device 70 are different at individual call centers. However, for a predictive dialer device that is software configured with computer programs, it is designed to use the same device among the call centers.

Incidentally, at least part of the CTI control device 72, the pacing control device 74, the collective operator management device 11, and the database management device 22 can be configured with a computer program, respectively. For example, they can be a CTI control program 72, a pacing control program 74, a collective operator management program 11, and a database management program 22, respectively.

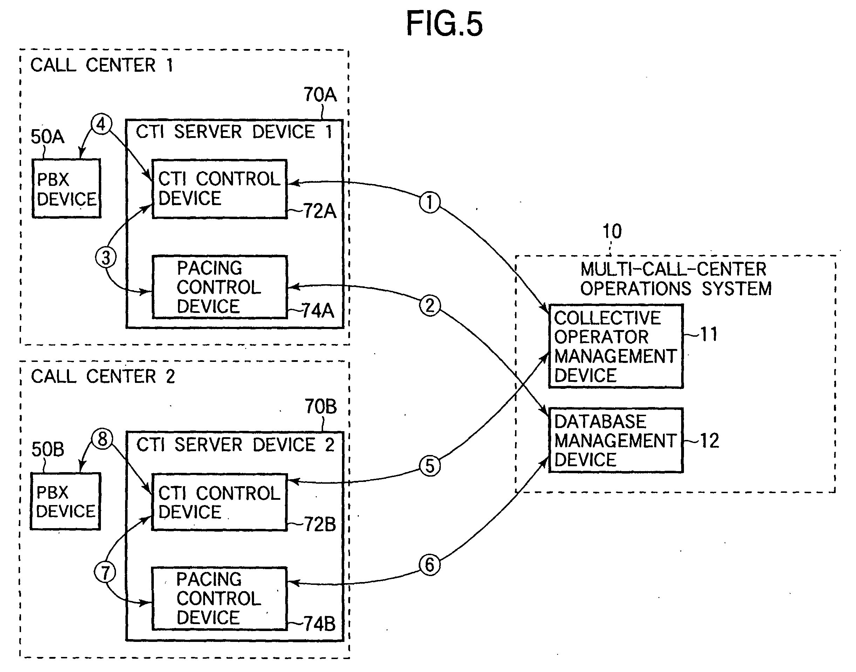

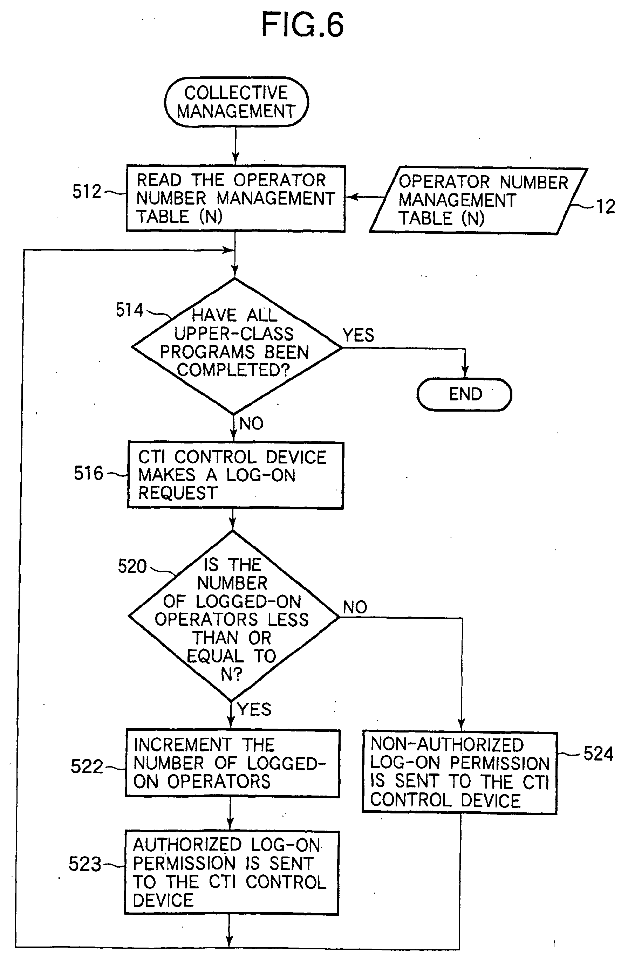

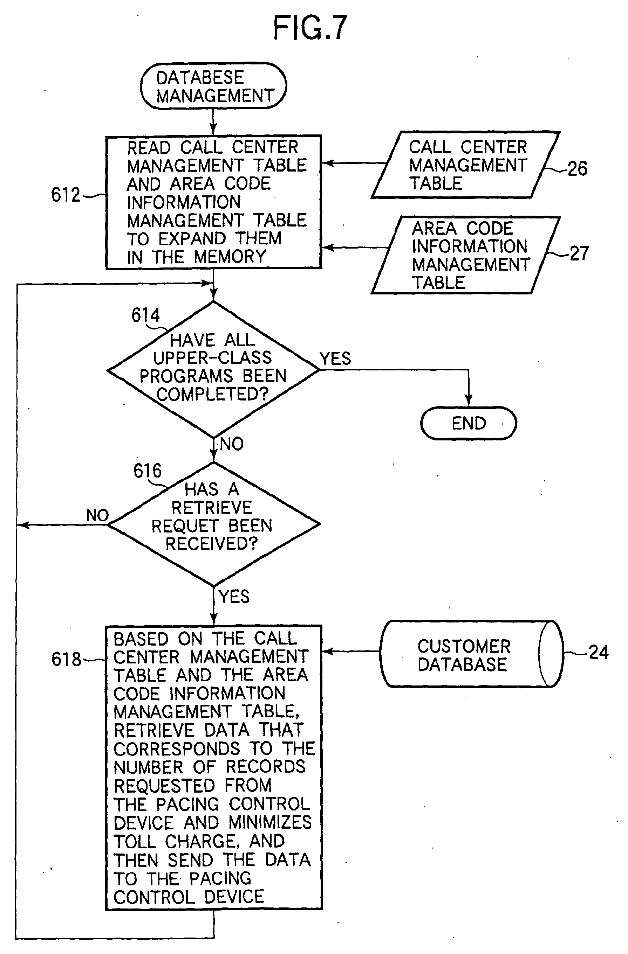

FIG. 5 is an explanatory block diagram illustrating the operation of this embodiment. FIG. 6 is a flowchart illustrating the processing of collective operator management in the multi-call-center according to this embodiment. FIG. 7 is a flowchart illustrating the processing of database management according to this embodiment.

In FIG. 5, for convenience of explanation, illustrated are two call centers, namely, a call center 1 and call center 2. In addition, for convenience of explanation, illustrated are a CTI control device 1 (72A) and a pacing control device 1 (74A) in a CTI server device 1 (70A); a CTI control device 2 (72B) and a pacing control device 2 (74B) in a CTI server device 2 (70B); and only related part of the configuration of the multi-call-center operations system 10. The numerical symbols ① to ⑧ in the figure represent transactions of signals, described later, which occur in the order of the numbers.

In FIG. 5, the CTI control device 1 sends CTI commands, such as "call", "respond", and "disconnect", to the PBX 1 (50A). In addition, the CTI control device 1 manages information sent from the PBX 1, such as "receive", "respond", and "disconnect". Additionally, the CTI control device 1 manages the state of operators.

The pacing control device 1 manages the states of an operator ("servicing", "post-call handling", and "idle"). This causes the pacing control device 1 to issue a request of the database management device 22 for a group of data for predictive calling provided by the predictive calling function. To the CTI control unit 1, the pacing control device 1 also transmits the group of data that has been received as a return value from the database management device 22 in response to the request.

The CTI control device 2 transmits CTI commands such as the "call", "respond", and "disconnect" to the PBX 2 (50B). The CTI control device 2 also manages information, such as "receive", "respond", and "disconnect", which is sent from the PBX 2. The CTI control device 2 also manages the state of operators.

The pacing control device 2 manages the states of an operator ("servicing", "post-call handling", and "idle"). This causes the pacing control device 2 to issue a request of the database management device 22 for a group of data for predictive calling. To the CTI control unit 2, the pacing control device 2 also transmits the group of data that has been received as a return value from the database management device 22 in response to the request.

Now, in the multi-call-center operations system 10, the collective operator management device 11 manages the number of logged-on operators at the CTI control unit 1 and the CTI control unit 2. FIG. 6 shows the detail in the flowchart. The database management device 22 extracts from the customer information database 24 the group of outgoing data that has been requested by the pacing control unit 1 and the pacing control unit 2. FIG. 7 shows the detail in the flowchart.

Incidentally, in this embodiment, being logged-on is the state of an operator who is available for service irrespective of whether the operator is actually in service or waiting for service such as for calls. In this embodiment, logging-on includes outbound service and inbound service. Additionally, in this embodiment, when logging on to outbound service, an operator enters at a client device 34 at the operator's place that he or she logs on to outbound service.

Now, the operation of this embodiment will be explained with reference to these block diagrams and flowcharts.

At a plurality of call centers, the number of operators who provide predictive calling service is assigned to the individual call centers flexibly. For this purpose, the collective operator management device 11 is implemented in the part of the multi-call-center operations system 10 to collectively manage the number of operators. Incidentally, the multi-call-center operations system 10 may be configured in the form of a typical database server or at least part thereof may be configured in such a database server.

First, suppose that when the number of operators who provide predictive calling service is assigned to the individual call centers, the collective operator management device 11 has authorized the logging-on of N predictive dialers at the entire call centers. The value of N is the maximum number of logged-on operators that is pre-registered in the operator number management table 12 shown in FIG. 8 and the maximum number of logged-on operators across all the call centers.

When an operator who belongs to the call center 1 has logged on to the CTI server device 1 or when the operator has entered at a client device 34 at the operator's place that he or she logs on to outbound service, the entry made is transmitted from the client device 34 to the CTI server device 70 (the CTI server device 1) via a LAN 59. Then, the CTI control device 1 in the CTI server device 1 makes an inquiry, in the data structure of a telegraphic message shown in upper portion of FIG. 11, about whether or not logging-on can be authorized at the collective operator management device 11 implemented in the multi-call-center operations system 10. Then, if the logging-on can be authorized, the collective operator management device 11 registers the operator information, and thereafter informs the CTI control device 1 in the CTI server device 1 of the authorized logging-on in the data structure of a telegraphic message shown in the lower portion of FIG. 11.

Incidentally, in FIG. 11, an operator ID is an identification number which is unique to individual operators and granted to individual operators at all the call centers. The operator ID makes it possible to identify to which operator the information or instruction is directed.

In FIG. 5, as shown by ①, the CTI control unit 1 issues a logging-on request to the collective operator management unit in the data structure of a telegraphic message shown in the upper portion of FIG. 11. In response to the request, the collective operator management device 11 performs the processing shown in steps 514 to 524 of FIG. 6. As a result, the collective operator management device 11 sends back a return value of 0 for normal termination and -1 for abnormal termination in the data structure of a telegraphic message shown in the lower portion of FIG. 11 to the CTI control unit 1.

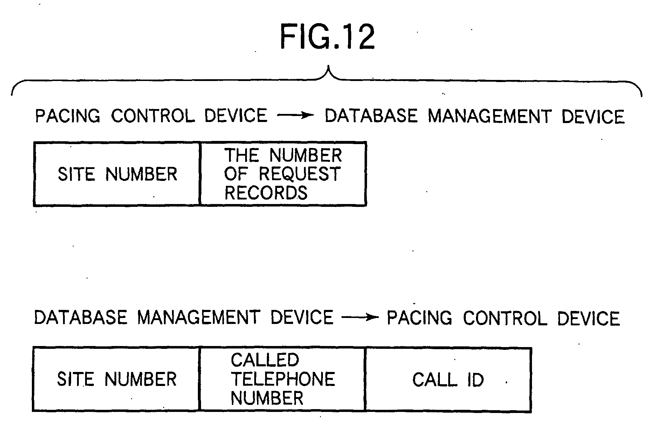

Then, as shown by ②, the pacing control unit 1 issues a request of the database management device 22 for a group of data for predictive calling in the data structure of a telegraphic message shown in the upper portion of FIG. 12. In response to the request, the database management device 22 performs the processing shown in steps 614 to 618 of FIG. 7. As a result, the database management device 22 sends back as a return value a group of data including a called telephone number in the data structure of a telegraphic message shown in the lower portion of FIG. 12.

Incidentally, in the lower portion of FIG. 12, a call ID is key information that a client device 54 employs for use such as in making an inquiry to the database management device 22 about customer information associated with the called telephone number.

Subsequently, in ③, the pacing control unit 1 transmits the group of data that has been acquired in ② to the CTI control unit 1. Then, in ④, the CTI control unit 1 transmits a calling command to the PBX 1 for each group of data that has been acquired in ②.

In addition, when an operator who belongs to the call center 2 has logged on to the CTI server device 2 or when the operator has entered at a client device 34 at the operator's place that he or she logs on to outbound service, the entry made is transmitted from the client device 34 to the CTI server device 70 (the CTI server device 2) via a LAN 59. Then, the CTI control device 2 in the CTI server device 2 makes an inquiry, in the data structure of the telegraphic message shown in upper portion of FIG. 11, about whether or not logging-on can be authorized at the collective operator management device 11 implemented in the multi-call-center operations system 10. Then, if the logging-on can be authorized, the collective operator management device 11 registers the operator information, and thereafter informs the CTI control device 2 in the CTI server device 2 of the authorized logging-on in the data structure of the telegraphic message shown in the lower portion of FIG. 11.

Then, in FIG. 5, as shown by ⑤, the CTI control unit 2 issues a logging-on request to the collective operator management unit in the data structure of the telegraphic message shown in the upper portion of FIG. 11. In response to the request, the collective operator management device 11 performs the processing shown in steps 514 to 524 of FIG. 6. As a result, the collective operator management device 11 sends back a return value of 0 for normal termination and -1 for abnormal termination in the data structure of the telegraphic message shown in the lower portion of FIG. 11 to the CTI control unit. 2.

Subsequently, in ⑥, the pacing control unit 2 issues a request of the database management device 22 for a group of data for predictive calling in the data structure of the telegraphic message shown in the upper portion of FIG. 12. In response to the request, the database management device 22 performs the processing shown in steps 614 to 618 of FIG. 7. As a result, the database management device 22 sends back as a return value a group of data including a called telephone number in the data structure of the telegraphic message shown in the lower portion of FIG. 12.

Then, in ⑦, the pacing control unit 1 transmits the group of data that has been acquired in ⑥ to the CTI control unit 1. Then, in ⑧, the CTI control unit 1 transmits a calling command to the PBX 1 for each group of data that has been acquired in ⑥.

As described above, by collectively managing operators who can log on, even when each of a plurality of sites provides a predictive calling using their own local switching systems of different types, it is. possible to flexibly assign the number of operators according to quickly changing circumstances without fixing the number of operators at the respective sites.

In addition, when each site provides predictive calling, the pacing control device 1 implemented in the CTI server device 1 and the pacing control device 2 implemented in the CTI server device 2 can issue a request of the database management device 22 implemented in the multi-call-center operations system 10 for data to be transmitted in conformity with each pacing control. At this time, the data can be extracted from the same database, thus allowing a plurality of call centers to implement predictive calling based on the same database.

Furthermore, in the CTI server management table of FIG. 9, stored are the location of a call center and the area code of the call center by the site number for identifying the call center. In addition, in the area code information table of FIG. 10, pre-stored by the area code of a district to be encompassed by predictive calling are the site number of the nearest call center offering the minimum toll charge (priority 1) and the site number of the second nearest call center offering the next minimum toll charge (priority 2). When extracting data for predictive calling, the database management device 22 uses the CTI server management table and the area code information table, thereby making it possible for each call center to provide predictive calling with minimum toll charges.

As described above, the first to third inventions of this application can be effectively applied to the first embodiment. Accordingly, several attempts are made to effectively use the human resource of a call center and the facility resource dependent also on the number of operators, efficiently maintain such as databases, and minimize toll charges for calls to customers, thereby minimizing the overall cost of operating the call center.

In this embodiment, as described above, the predictive dialer device provided in the pacing control unit 74 is different from the CTI control device 72 or the PBX 50, thus facilitating the provision of the predictive calling function regardless of the type of the local switching system (such as the PBX 50) installed in a call center. In particular, as described above, the predictive dialer device that is software configured with computer programs is characterized by facilitating the provision of the predictive calling function regardless of the type of the local switching system (such as the PBX 50) and by facilitating the provision of the same predictive calling function between call centers.

The fourth to seventh inventions of the present application are described below in detail with reference to the drawings in accordance with the embodiments.

In the first to fifth embodiments to be described below, a PBX 116 connects a customer-initiated call, incoming in response to an outgoing call to the customer made in outbound service, to either a call center 110 or a home agent device 200. In addition, in the fifth to eighth embodiments to be described below, an intra-station switch 172 connects such a customer-initiated call to a home agent device 200.

For example, in CBR (Carrier Based Routing), a switching system on the public switched telephone network routes incoming calls, which occur to the call centers, according to a certain routing rule in accordance with a predetermined fixed ratio between call centers. Furthermore, it is commonly practiced that the public switched telephone network coordinator presents the specification of a function for controlling such routing to offer the function to outsiders, for example, general businesses that operate or use a call center. Available are standard protocols such as SS7, UDP/IP, or X.25 although the fourth to seventh inventions of the present application are not limited thereto.

In addition, the processing through such protocols related to the public switched telephone network is a type of network service. One who controls routing makes an inquiry of the network service and then sends a resulting stipulated notice to the network service. This allows for finally determining the destination. The fifth to eighth embodiments to be described below make use of such network service. Incidentally, the node for the one who desires to use the network service to access the network service is also referred to as a SCP (Service Control Point).

Incidentally, in the second and fourth embodiments to be described below, the home agent device 200 is not available. Accordingly, in the following descriptions, it is to be understood that in the second and fourth embodiments, the home agent device 200 is replaced with one that is configured by a telephone 112 and an operator terminal 114 which are used by an operator (remote operator) at a remote call center 110.

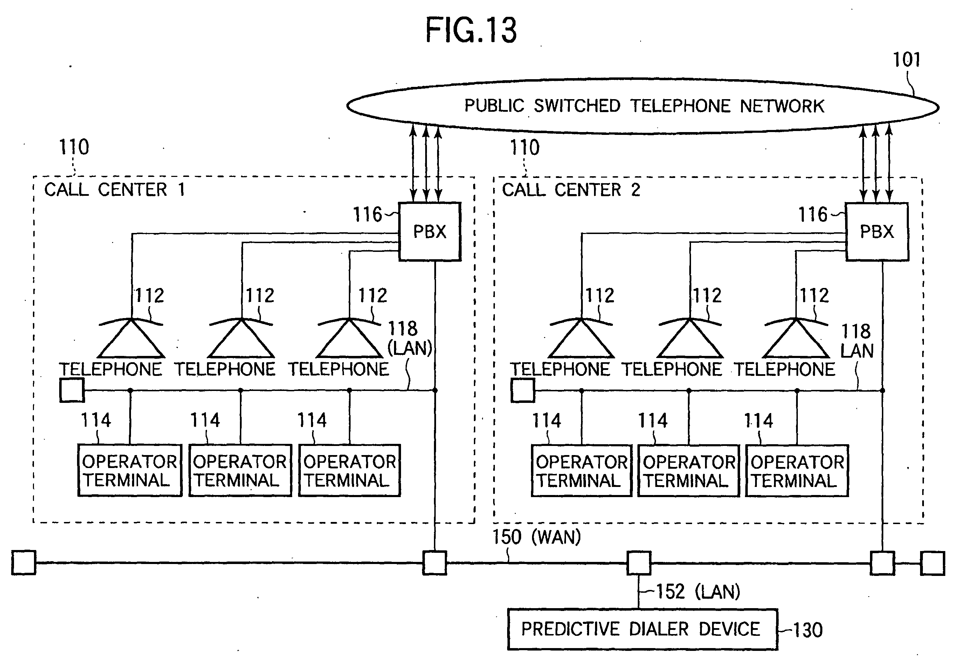

FIG. 13 is a block diagram illustrating the configuration of the second embodiment to which the fourth to seventh inventions of the present application are applied.

In the figure, it is possible to provide outbound service using a predictive dialer device 130 at either of two call centers 110. The call centers 110 are not limited to two in number but may be more than two.

In addition, either of these call centers 110 is located at a site different from that of the predictive dialer device 130. Therefore, either of them is a remote agent.

Alternatively, the predictive dialer device 130 may be located at the same site as either of the call centers 110 together therewith. In this case, call centers other than this call center 110 serve as remote agents.

In this figure, in a call center 110, a telephone 112 and a operator terminal 114 are arranged for each operator. The telephone 112 is connected to the public switched telephone network 101 via the PBX 116. The telephone 112 is connected to the telephone of a customer over the public switched telephone network 101. In addition, it is possible to implement the operator terminal 114, for example, with a personal computer.

In addition, a symbol "□" in the figure represents a connecting device for connecting between networks. All the operator terminals 114 and the PBX 116 are connected to a LAN (Local Area Network) 18 that is laid in each call center 110. In addition, any LAN 118 is connected to a WAN 150 through the aforementioned connecting devices.

Accordingly, the predictive dialer device 130 can communicate information with the PBX 116 over the WAN 150 and the LAN 118 at each call center 110. More specifically, the predictive dialer device 130 can acquire necessary information from the PBX 116. The predictive dialer device 130 can also send predetermined command information to the PBX 116, thereby controlling the operation of the PBX 116.

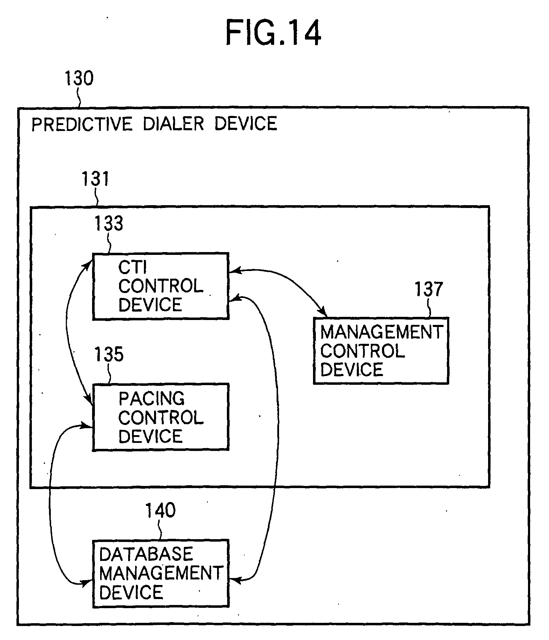

FIG. 14 is a block diagram illustrating the configuration of the predictive dialer device 130 to be used in this embodiment.

As illustrated, the predictive dialer device 130 has a predictive dialer control unit 131 and a database management device 140. In addition, the predictive dialer control unit 131 includes a CTI (Computer Telephony Integration) control device 33, a pacing control device 135, and a management control device 137.

The CTI control device 133 controls the PBX 116 to distribute a customer-initiated call incoming during inbound service to an operator. At this time, the CTI control device 133 controls the database management device 140 to send necessary information related to the incoming call to the operator terminal 114 at the related operator.

Furthermore, the CTI control device 133 has a function relating to outbound service. That is, the CTI control device 133 performs control such as on dialing for calling in the PBX 116 when the pacing control device 135 provides predictive calling (projected calling). In addition, upon such predictive calling, the information including a list of customers to be called is acquired one by one from the database management device 140 at the time of dialing.

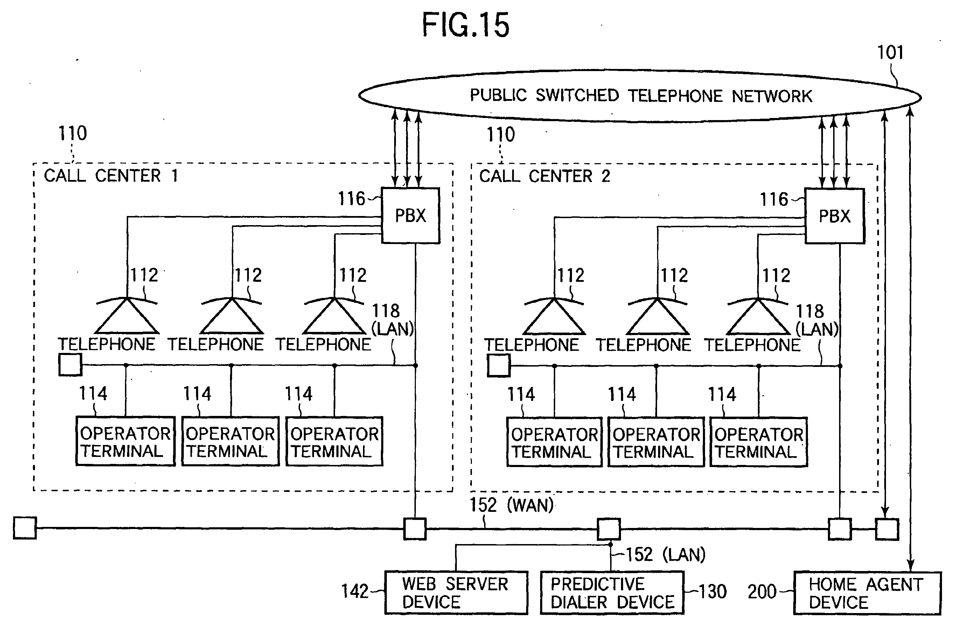

FIG. 15 is a block diagram illustrating the configuration of the third embodiment to which the fourth to seventh inventions of the present application are applied.

In contrast to the aforementioned second embodiment, this embodiment is additionally provided with the home agent device 200 and a Web server device 142. Other components are the same as those of the second embodiment.

In this figure, it is possible to provide outbound service using the predictive dialer device 130 at the two call centers 110. The call centers 110 are not limited to two in number but may be more than two.

In addition, either of these call centers 110 is located at a site different from that of the predictive dialer device 130. Therefore, either of them is a remote agent.

Alternatively, the predictive dialer device 130 may be located at the same site as either of the call centers 110 together therewith. In this case, call centers other than this call center 110 serve as remote agents.

Furthermore, in this embodiment, the home agent device 200 is a type of a remote agent and attended basically by one operator such as a person working at home as a remote operator . However, the home agent device 200 may be attended by several persons.

In addition, the operator terminal 114 provided to the home agent device 200 according to this embodiment employs a so-called browser program. For example, employed is a browser program such as the "Internet Explorer" of Microsoft in USA. In addition, the operator terminal 114 has no programs incorporated therein for logging-in and displaying the customer information. These programs are to be downloaded from the Web server device 142 on the part of the management control device every time they are executed. Therefore, on the part of the home agent device 200, no capacity in a hard disk device for storing these programs is thus required as well as no management is required to update these programs.

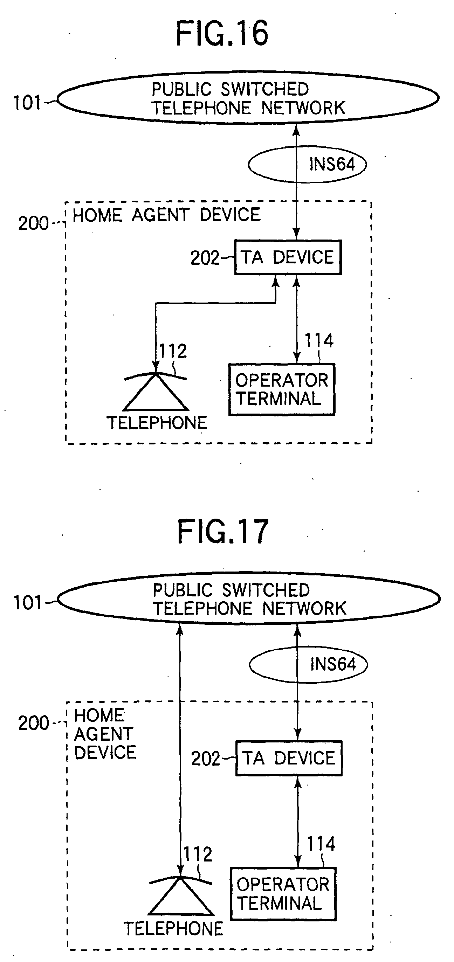

FIG. 16 is a block diagram illustrating the configuration of a first example of the home agent device 200.

The home agent device 200 according to the first example has a TA (Terminal Adapter) device 202 in addition to the telephone 112 and the operator terminal 114 used by the operator. The TA device 202 is a connecting device for connecting to the public switched telephone network 101 over the INS64 provided by NTT or a Japanese carrier. In the home agent device 200 according to the first example, the TA device 202 is used for calls through the telephone 112 over the public switched telephone network 101. In addition, the TA device 202 connects the operator terminal 114 to the WAN 150 through a predetermined access point over the public switched telephone network 101. Using the TA device 202, the operator terminal 114 may be connected to the WAN 150 over the Internet.

FIG. 17 is a block diagram illustrating the configuration of a second example of the home agent device 200.

The home agent device 200 according to the second example has the TA device 202 in addition to the telephone 112 and the operator terminal 114 used by the operator. Like the home agent device 200 according to the second example, in the home agent device 200 according to the second example, the TA device 202 connects the operator terminal 114 to the WAN 150 through a predetermined access point over the public switched telephone network 101. However, in the home agent device 200 according to the second example, calls through the telephone 112 over the public switched telephone network 101 do not pass through the TA device 202 but directly connect to the public switched telephone network 101.

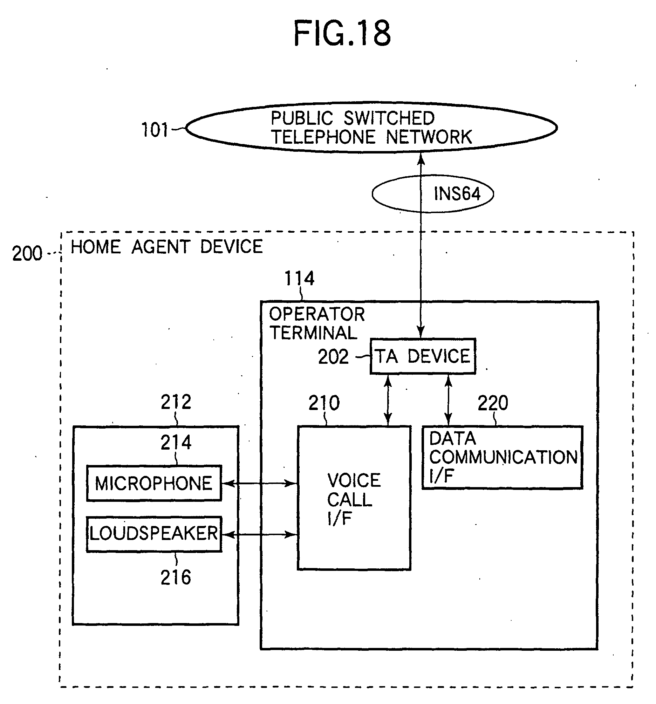

FIG. 18 is a block diagram illustrating the configuration of a third example of the home agent device 200.

In the home agent device 200 according to the third example, the TA device 202 is provided inside the operator terminal 114. For example, it is possible to implement the operator terminal 114 by a personal computer. The operator terminal 114 also has a voice call interface device 210 for implementing the telephone 112 in addition to a data communication interface device 220 for use with data communication in the operator terminal 114 using the TA device 202. The operator uses a headset 212, which is adapted to be put on the head of the operator (user) like a headphone and comprises a microphone device 214 and a loudspeaker device 216, to send a voice call from the microphone device 214 and receive a voice call from the loudspeaker device 216 to service a customer call. In addition, like the home agent device 200 according to the aforementioned first example, in the home agent device 200 according to the third example, the TA device 202 is used for calls through the telephone used by the operator over the public switched telephone network 101 and for the connection of the operator terminal 114 to the WAN 150.

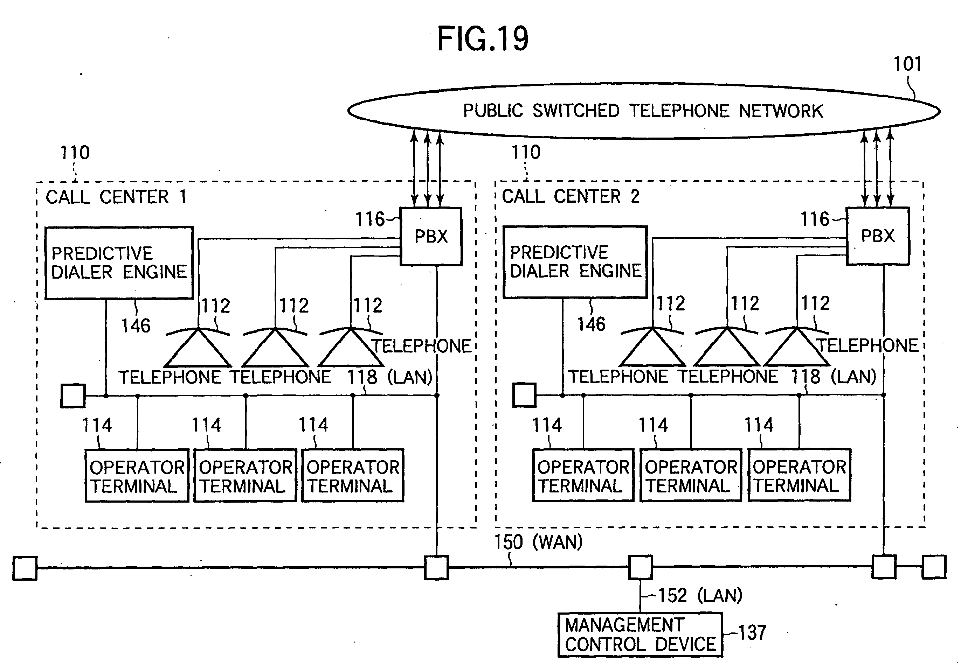

FIG. 19 is a block diagram illustrating the configuration of the fourth embodiment to which the fourth to seventh inventions of the present application are applied.

In this embodiment, part of the predictive dialer device 130 provided in the aforementioned second embodiment is formed as a predictive dialer engine 146, which is provided in each call center 110.

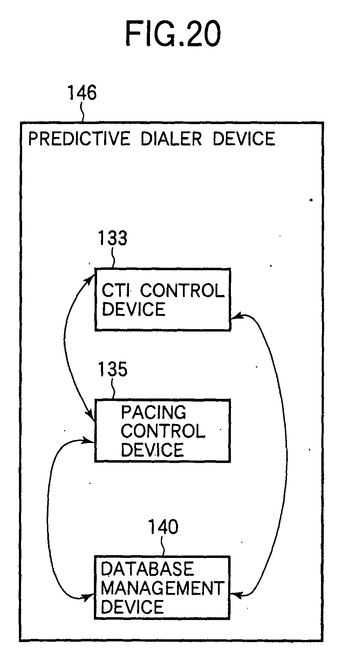

FIG. 20 is a block diagram illustrating the configuration of the predictive dialer engine 146 to be used in this embodiment.

As illustrated, the predictive dialer engine 146 comprises the CTI control device 133, the pacing control device 135, and the database management device 140, of those devices that are provided in the predictive dialer device 130 except for the management control device 137. The management control device 137 is provided separately from the predictive dialer engine 146.

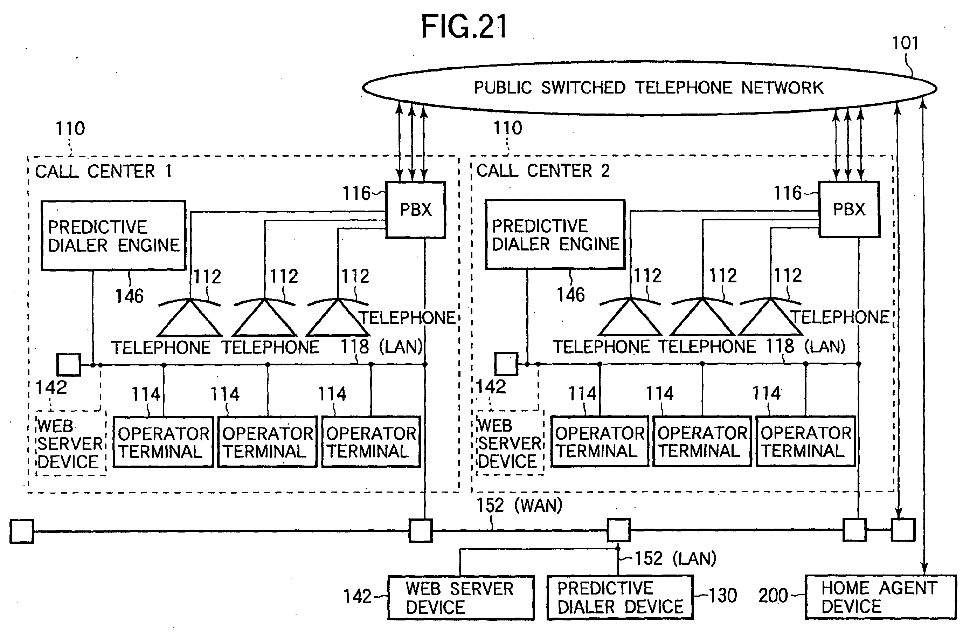

FIG. 21 is a block diagram illustrating the configuration of the fifth embodiment to which the fourth to seventh inventions are applied.

In this embodiment, the home agent device 200 and the Web server device 142 are added to the aforementioned fourth embodiment. The Web server device 142 and the management control device 137 are connected to a LAN 152. The LAN 152 is in turn connected to the WAN 150. Other components are the same as those of the fourth embodiment.

Incidentally, the Web server device 142 is arranged together with the management control device 137, thereby making it possible to collectively manage these devices. For example, various activities can be collectively managed, such as updating programs for controlling these devices or for being downloaded to the operator terminal 114 provided in the Web server device 142. However, as shown by broken lines with reference numeral 42 in FIG. 21, the Web server device 142 may be provided on the part of the call center 110.

The home agent device 200 is a type of a remote agent and attended basically by one operator such as a person working at home as a remote operator . However, the home agent device 200 may be attended by several persons.

In addition, the operator terminal 114 provided to the home agent device 200 according to this embodiment employs a so-called browser program. For example, employed is a browser program such as the "Internet Explorer" of Microsoft in USA. In addition, the operator terminal 114 has no programs incorporated therein for logging-in and displaying the customer information. These programs are to be downloaded from the Web server device 142 on the part of the management control device every time they are executed. Therefore, on the part of the home agent device 200, no capacity in a hard disk device for storing these programs is thus required as well as no management is required to update these programs.

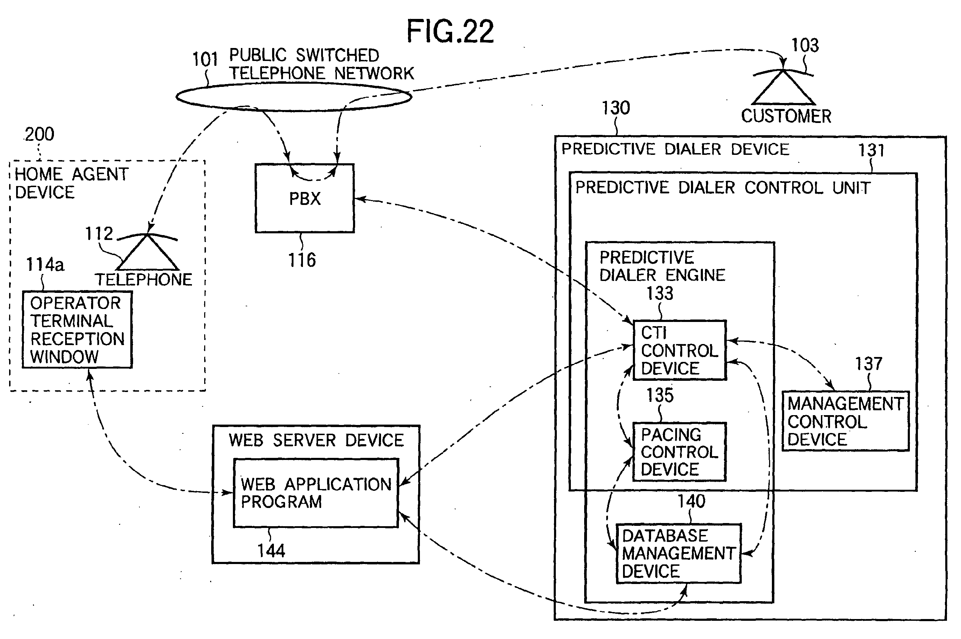

FIG. 22 is a block diagram illustrating the flow of a signal to explain the operation of the aforementioned first to fifth embodiments.

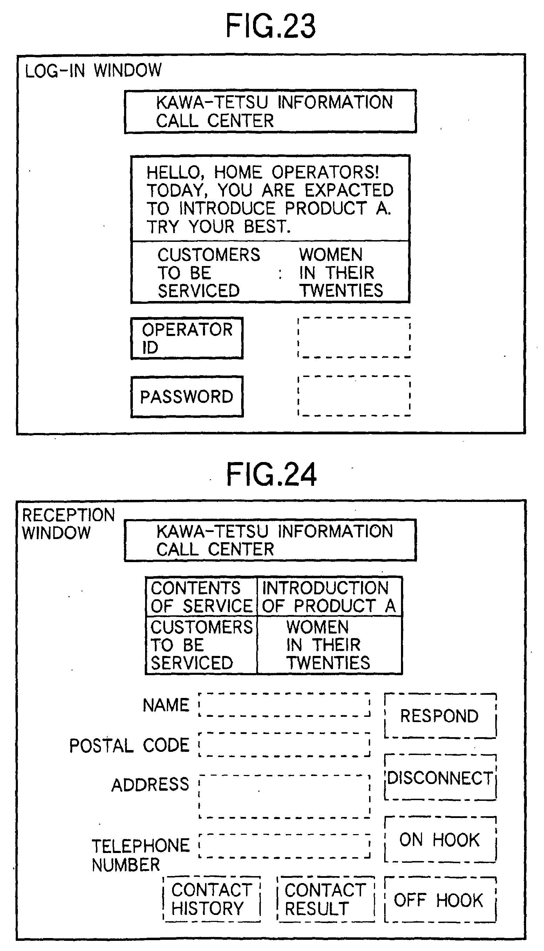

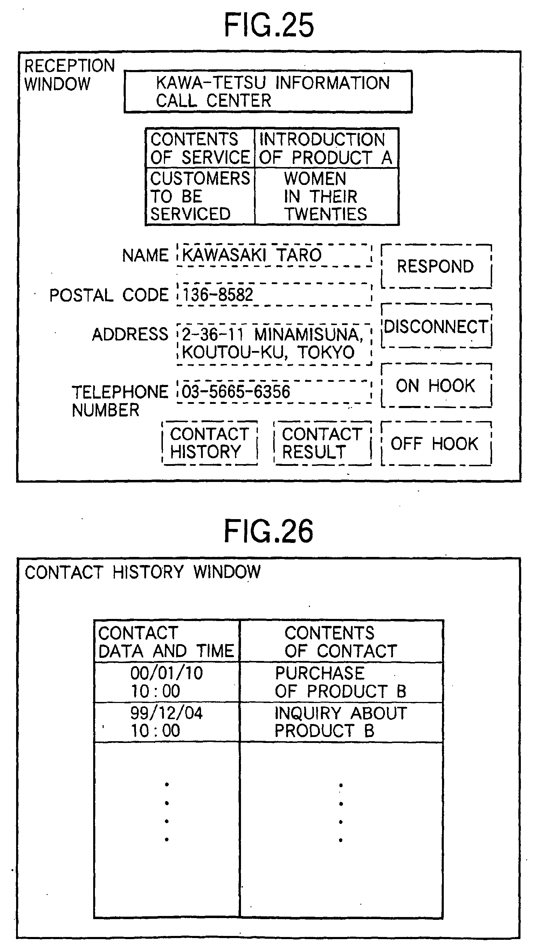

In this figure, one dot chain lines indicate voice calls to service a customer 103. In addition, two dot chain lines indicate the flow of control signals for establishing and maintaining such calls and for providing the operator with information regarding the customer 103 during such call servicing. In addition, an operator terminal reception window 114a is displayed on the operator terminal 114, including windows shown in FIGS. 24 and 25, which are described later.

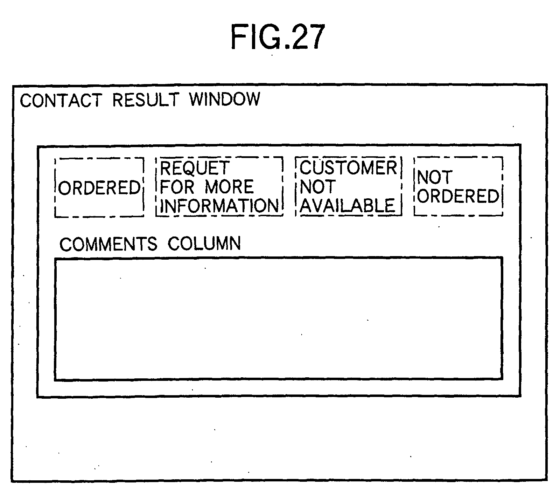

Now, FIG. 23 is a diagram illustrating a login window in these embodiments. FIG. 24 is a diagram illustrating a first reception window in these embodiments. FIG. 25 is a diagram illustrating a second reception window in these embodiments. FIG. 26 is a diagram illustrating a contact history window in these embodiments. FIG. 27 is a diagram illustrating a contact result window in these embodiments.

In FIGS. 23 to 27, a rectangular box indicated by an one dot chain line represents a pushbutton on the window that can be pointed using a mouse or a pointing input device and pushed by clicking the mouse. In addition, a rectangular box indicated by a broken line represents a region in which input characters are displayed. Alternatively, the rectangular box indicated by a broken line represents a region in which information such as information regarding customers that has been already entered is displayed. Incidentally, the operator terminal 114 is connected with a mouse and a keyboard as input means for use by the operator.

Referring to FIGS. 22 to 27, the operation of the first to fifth embodiments are described below.

Now, in these embodiments, to log in by the operator terminal 114 of the home agent device 200, the following list Qf items are carried out in the order in which they appear.

### A. Logging-in activity of home agent

A1. The operator (an remote operator) at the home agent device 200 starts running a browser program at the operator terminal 114 of the home agent device 200. Then, the operator accesses the Web server device 142. In . addition, the operator operates the browser program to display a log-in window illustrated in FIG. 23, thereby downloading a program for displaying the log-in window, the program being one of Web application programs 144 on the Web server device 142, thereafter starting running the program. Incidentally, the operator terminal 114 may access the Web server device 142 over either the Internet or another path such as the WAN 150.
A2. Then, the operator at the home agent device 200 makes a log-in request of the predictive dialer control unit 131 in the window displayed on the operator terminal 114 as shown in FIG. 23 over either the Internet or another path such as the WAN 150.
A3. The predictive dialer control unit 131 registers the home agent device 200 which has made the log-in request.
A4. To display the reception window shown in FIG. 24 or 25 over either the Internet or another path such as the WAN 150 on the operator terminal 114 of the home agent device 200 which has made the log-in request, a program for displaying the reception windows is started running, the program being one of the Web application programs 144 on the Web server device 142. The reception window is displayed on the operator terminal 114 as such.

Then, in these embodiments, in the predictive calling processing on the home agent device 200, the following list of items are carried out in the order in which they appear.

### B. Predictive calling processing

B1. The predictive dialer control unit 131 requests the database management device 140 for calling data.
B2. The database management device 140 transmits the calling data requested by the predictive dialer control unit 131 to the predictive dialer control unit 131.
B3. The predictive dialer control unit 131 issues a calling command to the PBX 116.

Additionally, in these embodiments, in the connection processing between the home agent device 200 and the customer 103, the following list of items are carried out in the order in which they appear.

### C. Connection processing with home agent

C1. The PBX 116 forwards the call responded by the customer 103 to the telephone 112 of the home agent device 200. At this point, the customer 103 and the telephone 112 of the home agent device 200 make ringing sounds.
C2. The PBX 116 transmits response information to the CTI control device 133.
C3. The CTI control device 133 transmits the response information to the database management device 140.
C4. The database management device 140 retrieves a database managed by the database management device 140 in accordance with the response information to acquire information regarding the customer. Then, over either the Internet or another path such as the WAN 150, a program for displaying the reception windows notifies the response state of the customer 103 and the information regarding the customer, the program being one of the Web application programs 144 on the Web server device 142.
C5. On the part of the home agent device 200, the operator connects to the customer 103 with the telephone 112 being in the off-hook state. In addition, on the reception window, the operator pushes the "response" button on the reception window shown by a one dot chain line in FIG. 24. Then, as shown in FIG. 25, it is possible to display the information regarding the customer on the reception window over either the Internet or another path such as the WAN 150. Furthermore, the operator carries out predetermined operations, thereby making it possible to display the window illustrated in FIG. 26 or 27 on the operator terminal 114 of the operator. It is possible to display the window of FIG. 26 by pushing the "Contact history" button illustrated by a one dot chain line in FIG. 24 or 25 and the window of FIG. 27 by pushing the "Contact result" button.

As described above, according to these embodiments, the fourth to seventh inventions of the present application are effectively applicable. Accordingly, for outbound service, operators working for a call center to service customers can also be located remotely, thereby making it possible to improve the operation efficiency of the call center and reduce the cost of operating the call center.

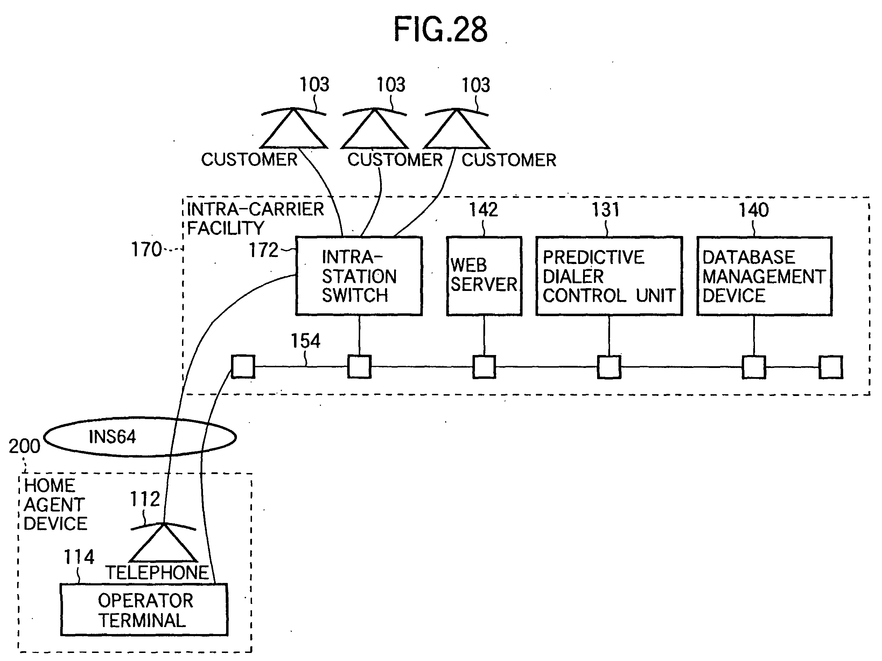

FIG. 28 is a block diagram illustrating the configuration of the sixth embodiment to which the fourth to seventh inventions are applied.

In this embodiment, and the sixth and eighth embodiments descried later, an intra-carrier facility 170 is included in the public switched telephone network. In addition, the intra-station switch 172 of the intra-carrier facility 170 switches line connections on the public switched telephone network.

In this embodiment, the intra-carrier facility 170 included in the public switched telephone network is adapted to implement the function part of the aforementioned predictive dialer device 130. That is, the intra-carrier facility 170 implements the predictive dialer control unit 131 and the database management device 140 as well as the Web server device 142.

Incidentally, in the intra-carrier facility 170, a network 154 for connecting the intra-station switch 172 and others is a predetermined network such as a LAN.

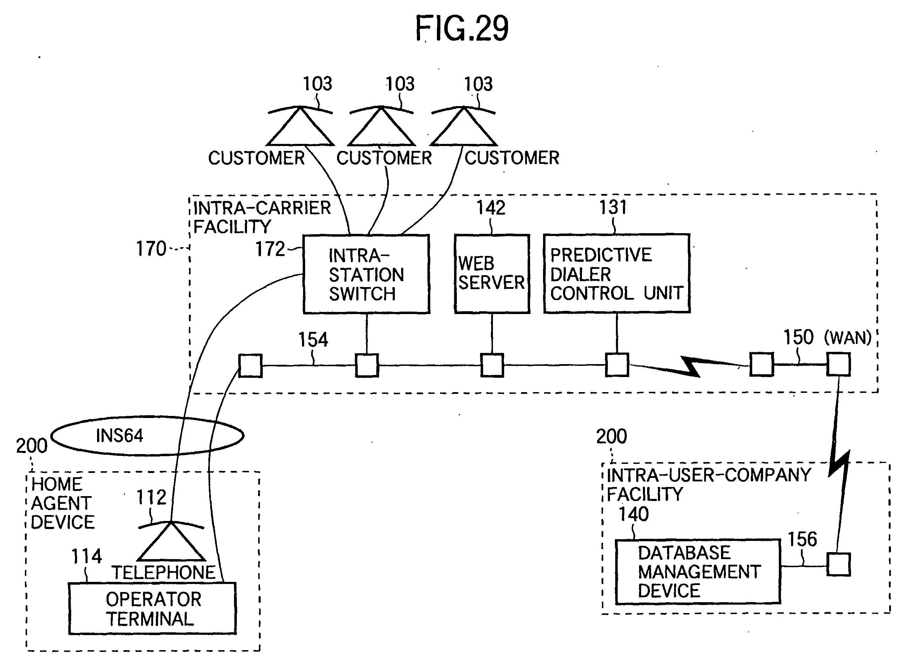

FIG. 29 is a block diagram illustrating the configuration of the seventh embodiment to which the fourth to seventh inventions are applied.

In this embodiment, the intra-carrier facility 170 included in the public switched telephone network is adapted to implement the function part of the aforementioned predictive dialer device 130. That is, the intra-carrier facility 170 implements the predictive dialer control unit 131 as well as the Web server device 142. In addition, the database management device 140 is provided in an intra-user-company facility 180.

Here, the aforementioned user company uses outbound service to provide various services for customers through the outbound service.

In this embodiment, the database management device 140 is provided in the intra-user-company facility 180, thereby making it possible for the user company to readily update the database management device 140. For example, upon predictive calling, it is possible to readily update information stored in the database management device 140 including a list of the customer 103 to be called.

Incidentally, in the intra-user-company facility 180, a network 156 for connecting the database management device 140 and others is a predetermined network such as a LAN.

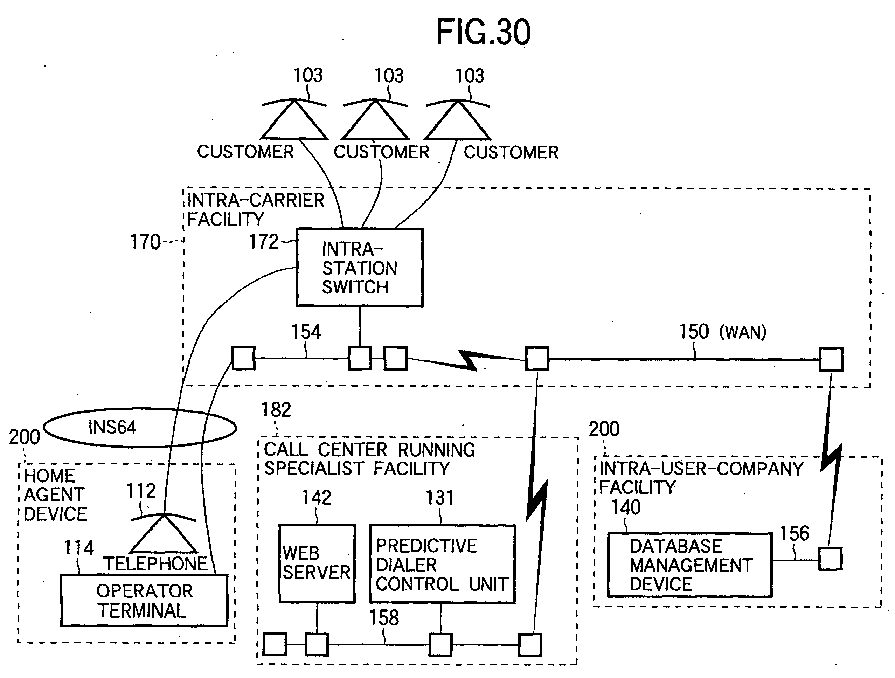

FIG. 30 is a block diagram illustrating the configuration of the eighth embodiment to which the fourth to seventh inventions are applied.

In this embodiment, using the aforementioned network service, a facility 182 on the part of a call center running specialist company is adapted to control routing in the intra-station switch 172. That is, using such a network service, the predictive dialer control unit 131 in the call center running specialist facility 182 routes a call, initiated by the customer 103 in response to predictive calling, to the telephone 112 of an appropriate home agent device 200.

Here, the aforementioned call center running specialist company is commissioned to provide outbound services. The call center running specialist company has facilities and operators for providing such services, and is commissioned to provide various services that the aforementioned outbound service user company provides for customers.

In this embodiment, the function part of the aforementioned predictive dialer device 130 is implemented in the call center running specialist facility 182. That is, the call center running specialist facility 182 is adapted to implement the predictive dialer control unit 131 as well as the Web server device 142. In addition, the database management device 140 is provided in the intra-user-company facility 180.

In this embodiment, the database management device 140 is provided in the intra-user-company facility 180, thereby making it possible for a user company to readily update the database management device 140. For example, upon predictive calling, it is possible to readily update information stored in the database management device 140 including a list of the customer 103 to be called.

Furthermore, the configuration for providing outbound service and inbound service is provided in the call center running specialist facility 182. Accordingly, the call center running specialist company can make use of their know-how to maintain the facilities for use with these services.

Incidentally, in the call center running specialist facility 182, a network 158 for connecting the predictive dialer control unit 131 and others is a predetermined network such as a LAN.

In addition, the network 158 is connected to the aforementioned node called SCP in the intra-carrier facility 170, thereby having access to the intra-station switch 172 through the aforementioned network service. This access allows the predictive dialer control unit 131 of the call center running specialist facility 182 performs calling and switching control on the intra-station switch 172.

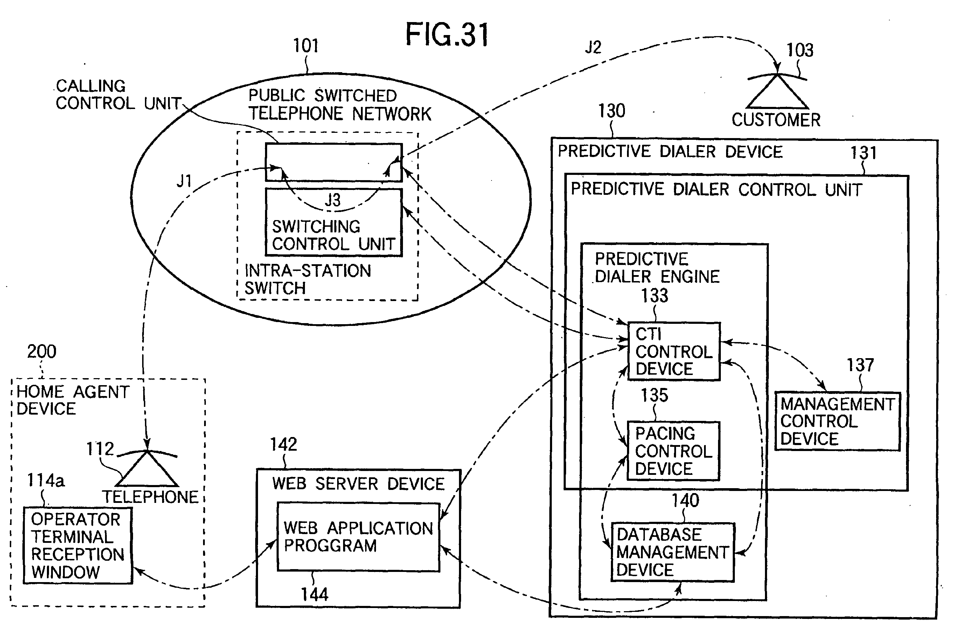

FIG. 31 is a block diagram illustrating the flow of a signal to explain the operation of the aforementioned fifth to eighth embodiments.

As illustrated in this figure, the intra-station switch 172 has a calling control unit 174 and a switching control unit 176. The calling control unit 174 and the switching control unit 176 are controlled on the part of the predictive dialer device 130 through a network service provided by the aforementioned public switched telephone network 101.

Being controlled by the network service as such, the calling control unit 174 provides calling to the line of the telephone 112 in the home agent device 200, thereby switching the line into a standby state as shown by a one dot chain line J1 in the figure. In addition, being controlled by the network service as such, the calling control unit 174 provides calling to the line of the telephone of the customer 103, thereby switching the line into a standby state as shown by a one dot chain line J2 in the figure. Then, through such a network service, the switching control unit 176 connects these standby-state lines to each other as shown by a one dot chain line J3 in the figure.

With reference to FIG. 31, and FIGS. 23 to 27 described above, the operation of the fifth to eighth embodiments is described below.

First, in these embodiments, in the logging-in at the operator terminal 114 of the home agent device 200, the following list of items are carried out in the order in which they appear.

### D. Logging-in activity of home agent

D1. The operator (an remote operator) at the home agent device 200 starts running a browser program at the operator terminal 114 of the home agent device 200. Then, the operator accesses the Web server device 142. In addition, the operator operates the browser program to display the log-in window illustrated in FIG. 23, thereby downloading a program for displaying the log-in window, the program being one of Web application programs 144 on the Web server device 142, thereafter starting running the program. Incidentally, the operator terminal 114 may access the Web server device 142 over either the Internet or another path such as the WAN 150.
D2. Then, the operator at the home agent device 200 makes a log-in request of the predictive dialer control unit 131 in the window displayed on the operator terminal 114 as shown in FIG. 23 over either the Internet or another path such as the WAN 150.
D3. The predictive dialer control unit 131 connects a communications line to the intra-station switch 172, the communications line being connected to the telephone 112 of the home agent device 200 which has made the log-in request.
D4. To display the reception window shown in FIG. 24 or 25 over either the Internet or another path such as the WAN 150 on the operator terminal 114 of the home agent device 200 which has made the log-in request, a program for displaying the reception windows is started running, the program being one of the Web application programs 144 on the Web server device 142. The reception window is displayed on the operator terminal 114 as such.

Then, in these embodiments, in the predictive calling processing on the home agent device 200, the following list of items are carried out in the order in which they appear.

### E. Predictive calling processing

E1 the predictive dialer control unit 131 requests the database management device 140 for calling data.
E2. The database management device 140 transmits the calling data requested by the predictive dialer control unit 131 to the predictive dialer control unit 131.
E3. The predictive dialer control unit 131 issues a calling command to the intra-station switch 172.

Additionally, in these embodiments, in the connection processing between the home agent device 200 and the customer 103, the following list of items are carried out in the order in which they appear.

### F. Connection processing with home agent

F1. The intra-station switch 172 distributes the call responded by the customer 103 to the communications line connected to the telephone 112 of the home agent device 200. At this point, the customer 103 and the telephone 112 of the home agent device 200 are brought into an off-hook state.
F2. The intra-station switch 172 transmits response information to the CTI control device 133 inside the predictive dialer control unit 131.
F3. The CTI control device 133 transmits the response information to the database management device 140.
F4. The database management device 140 retrieves a database managed by the database management device 140 in accordance with the response information to acquire information regarding the customer. Then, over either the Internet or another path such as the WAN 150, a program for displaying the reception windows notifies the response status of the customer 103 and the information regarding the customer, the program being one of the Web application programs 144 on the Web server device 142.
F5. On the part of the home agent device 200, the operator confirms the connection with the customer 103 by a connection sound from the intra-station switch 172, and thereafter pushes the "response" button on the reception window shown by a one dot chain line in FIG. 24. Then, as shown in FIG. 25, it is possible to display the information regarding the customer on the reception window over either the Internet or another path such as the WAN 150. Furthermore, the operator carries out predetermined operations, thereby making it possible to display the window illustrated in FIG. 26 or 27 on the operator terminal 114 of the operator.

As described above, according to these embodiments, the fourth to seventh inventions of the present application are effectively applicable. Accordingly, for outbound service, operators working for a call center to service a customer 103 can also be located remotely, thereby making it possible to improve the operation efficiency of the call center and reduce the cost of operating the call center.

The eighth to tenth inventions of the present application are described below in detail with reference to the drawings in accordance with the embodiments.

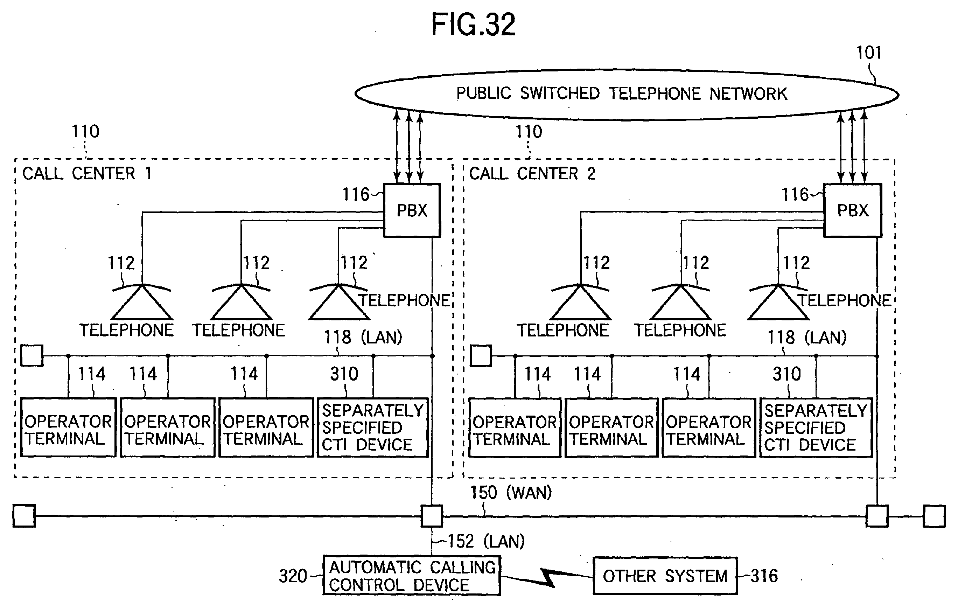

FIG. 32 is a block diagram illustrating the configuration of the ninth embodiment to which the eighth to tenth inventions of the present application are applied.

In the figure, it is possible to provide outbound service using an automatic calling control device 320 at either of two call centers 110. The call centers 110 are not limited to two in number but may be more than two.

In addition, either of these call centers 110 is located at a site different from that of the automatic calling control device 320. Therefore, either of them is a remote agent. Either of these call centers 110 can make use of a function for utilizing the automatic calling control device 320 over the WAN (Wide Area Network) 150.

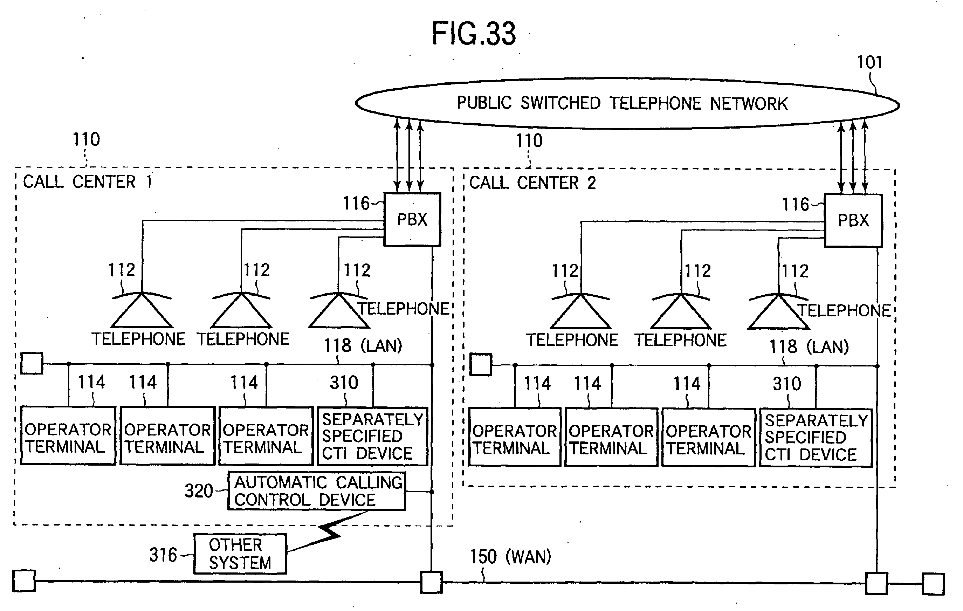

Alternatively, like the modified example of FIG. 33, the automatic calling control device 320 may be located at the same site as either of the call centers 110 together therewith. In this case, the call center 110 with no automatic calling control device 320 being provided therein is a remote agent, being capable of making use of the function for utilizing the automatic calling control device 320 over the WAN 150.

In this figure, in a call center 110, a telephone 112 and a operator terminal 114 are arranged for each operator. The telephone 112 is connected to the public switched telephone network 101 via the PBX 116. The telephone 112 is connected to the telephone of a customer over the public switched telephone network 101. In addition, it is possible to implement the operator terminal 114, for example, with a personal computer.

A separately specified CTI device 310 controls the PBX 116 by sending a predetermined command thereto, thereby allowing the PBX 116 to operate to forward connection calls. It is also possible for the operator terminal 114 to provide information regarding the connection call for the operator who uses the telephone 112 to be connected to the PBX 116. For example, it is possible to provide information that can be used with operator service, such as the address of the connected customer or the history of inquiries made in the past.

In addition, when having received an incoming customer-initiated call during inbound service, the separately specified CTI device 310 controls the PBX 116 to distribute the incoming call to an operator. At this time, necessary information relating the incoming call is acquired from a database device inside the separately specified CTI device 310 or from a database control unit 350 and a database information storage unit 352 over a path (not shown), and then transmitted to the operator terminal 114 of the operator.

In addition, a symbol "□" in the figure represents a connecting device for connecting between networks. All the operator terminals 114 and the PBX 116 are connected to a LAN (Local Area Network) 18 that is laid in each call center 110. In addition, any LAN 118 is connected to a WAN 150 through the aforementioned connecting devices.

Accordingly, the automatic calling control device 320 can communicate information with the PBX 116 over the WAN 150 and the LAN 118 at each call center 110. More specifically, the automatic calling control device 320 can acquire necessary information from the PBX 116. The automatic calling control device 320 can also send predetermined command information to the PBX 116, thereby controlling the operation of the PBX 116.

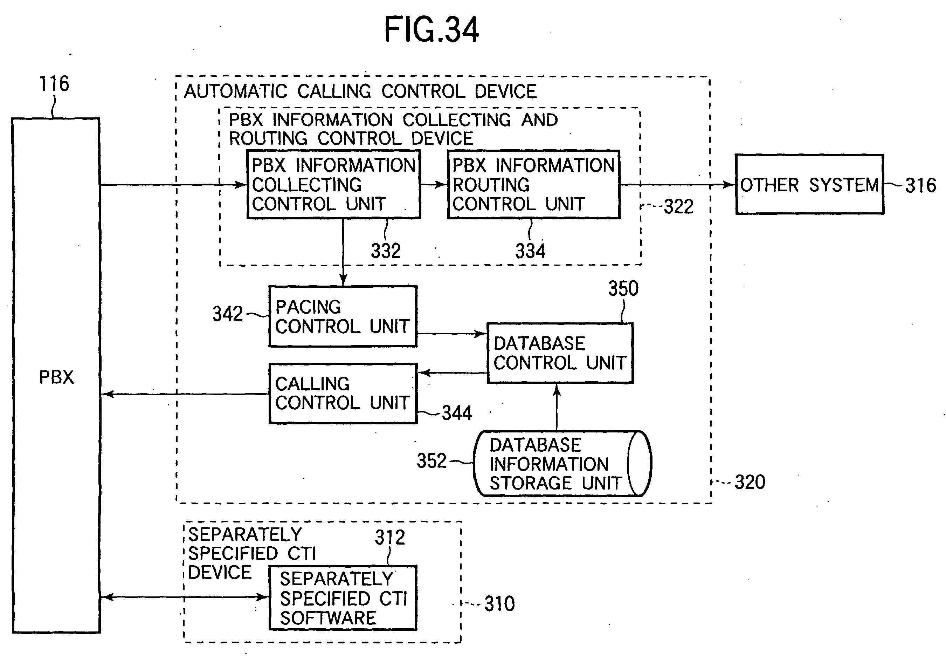

FIG. 34 is a block diagram illustrating the configuration of the automatic calling control device 320 to be used in this embodiment.

As illustrated, the automatic calling control device 320 comprises a PBX information collecting and routing control device 322, a pacing control unit 342, a calling control unit 344, the database control unit 350, and the database information storage unit 352. In addition, the PBX information collecting and routing control device 322 comprises a PBX information collecting control unit 332 and a PBX information routing control unit 334.

Here, the pacing control unit 342, the calling control unit 344, the database control unit 350, and the database information storage unit 352 implement the function of a predictive dialer. Upon the predictive calling provided by the function, use is made of information regarding the called customer such as the telephone number of the customer, the information being controlled and read by the database control unit 350 and stored in the database information storage unit 352. Then, the pacing control unit 342 provides an actual predictive calling (projected calling). At this time, the dialing for calling in the PBX 116 to the public switched telephone network 101 is carried out by the PBX 116 in accordance with an instruction of the calling control unit 344 based on the telephone number of the customer that has been read as described above. The predictive calling is successively provided for each of a plurality of customers in this way.

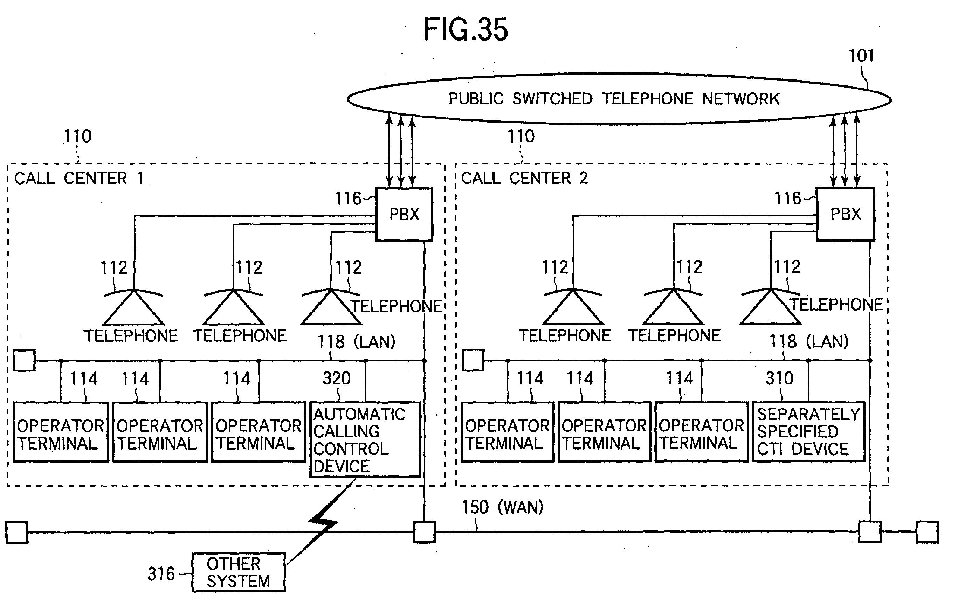

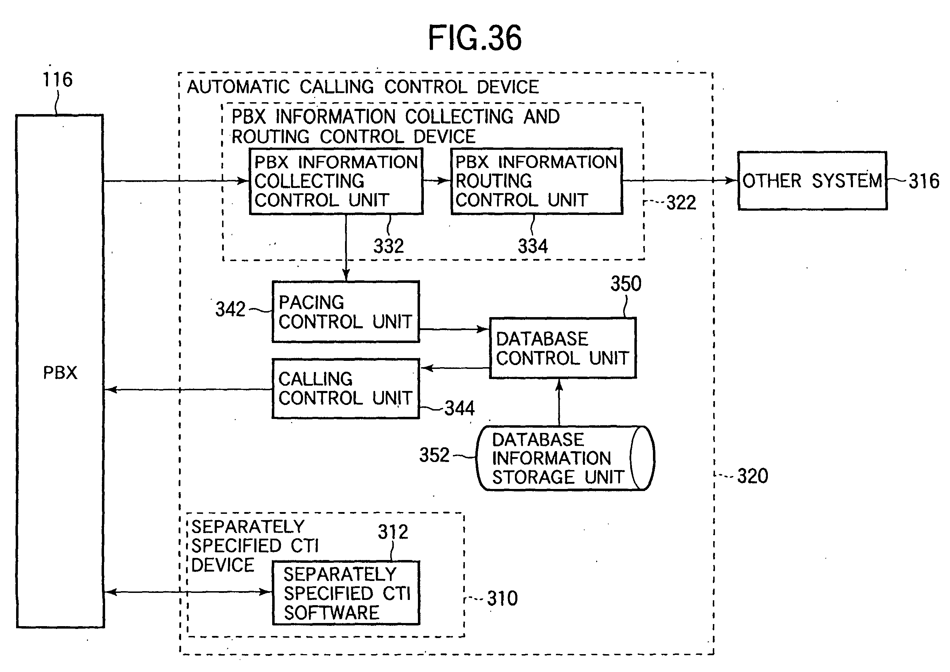

FIG. 35 is a block diagram illustrating the configuration of the tenth embodiment to which the eighth to tenth inventions of the present application are applied. FIG. 36 is a block diagram illustrating the configuration of the automatic calling control device 320 to be used in this embodiment.

First, as can be seen from FIG. 35, like the modified example of FIG. 33 according to the aforementioned ninth embodiment, the automatic calling control device 320 is located in either one of call centers 110. Furthermore, as can be seen from FIG. 36, the separately specified CTI device 310 is incorporated into the automatic calling control device 320. Accordingly, this embodiment is configured in the same way as the aforementioned modified example, and can function in the same way as the modified example.

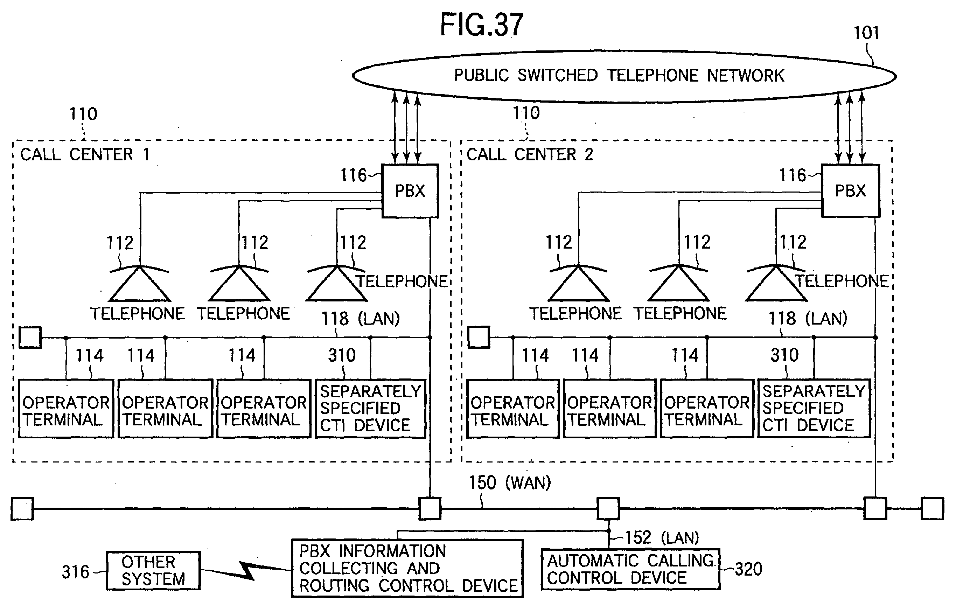

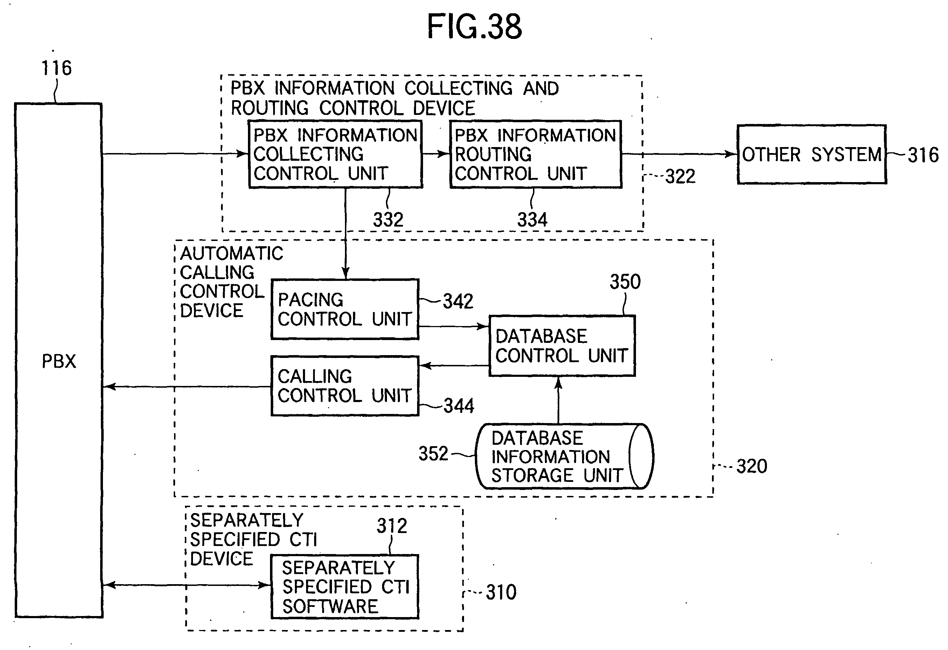

FIG. 37 is a block diagram illustrating the configuration of the eleventh embodiment to which the eighth to tenth inventions of the present application are applied. FIG. 38 is a block diagram illustrating the configuration of the automatic calling control device 320 to be used in this embodiment.

First, as can be seen from FIG. 38, the PBX information collecting and routing control device 322, which is built inside the automatic calling control device 320 in the aforementioned ninth embodiment, is disposed outside the automatic calling control device 320 in this embodiment. However, as shown in FIG. 37, the automatic calling control device 320 of the eleventh embodiment is connected to the LAN 152 in conjunction with the PBX information collecting and routing control device 322, and they operate in collaboration with each other or in the same way as the automatic calling control device 320 of the aforementioned ninth embodiment. Accordingly, this embodiment is configured and can function in the same way as the ninth embodiment.

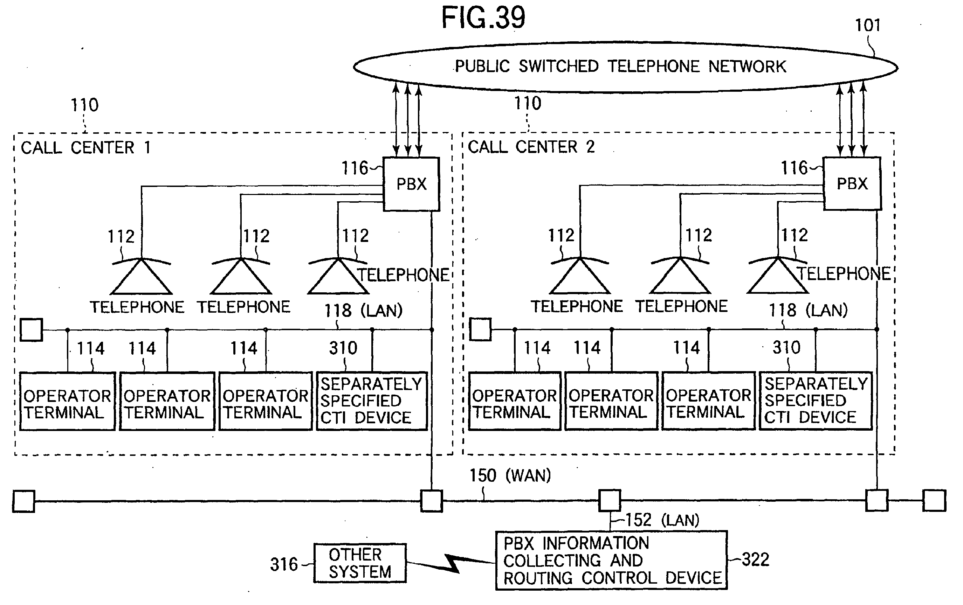

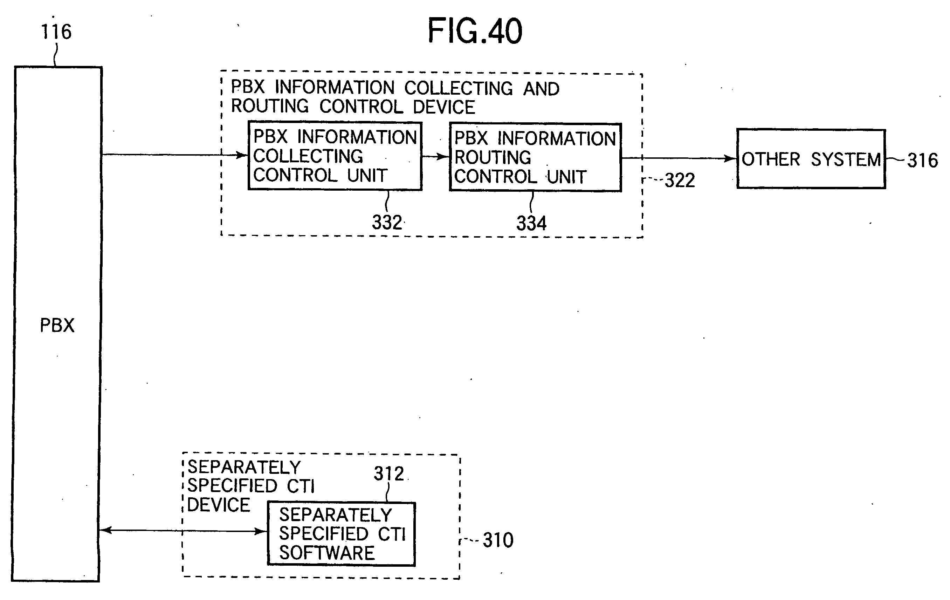

FIG. 39 is a block diagram illustrating the configuration of the twelfth embodiment to which the eighth to tenth inventions of the present application are applied. FIG. 40 is a block diagram illustrating the configuration of the PBX information collecting and routing control device 322 to be used in this embodiment.

First, as can be seen from FIG. 40, the PBX information collecting and routing control device 322, which is disposed inside the automatic calling control device 320 in the aforementioned ninth embodiment, is used as a separate device in this embodiment and connected to the LAN 152. In this embodiment, the PBX information collecting and routing control device 322 is not provided with the automatic calling control device 320. In this embodiment, the information acquired by the PBX information collecting and routing control device 322 is sent to other system 316. That is, within the scope illustrated in FIG. 39, this embodiment has no automatic calling function. However, it is also possible to provide some automatic calling function, for example, the other system 316 can be provided with the automatic calling function.

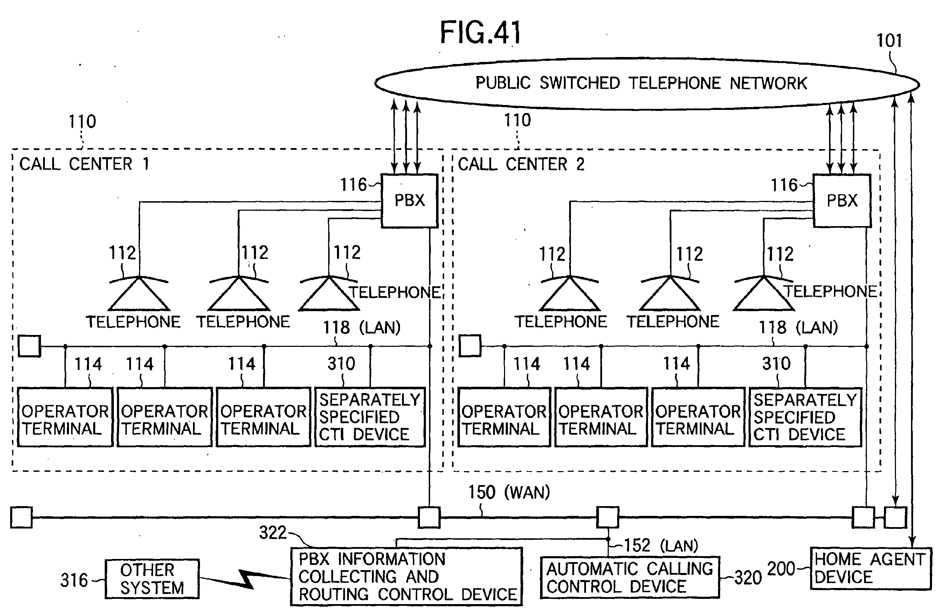

FIG. 41 is a block diagram illustrating the configuration of the thirteenth embodiment to which the eighth to tenth inventions of the present application are applied.

In this embodiment, the home agent device 200 is added to the aforementioned eleventh embodiment. Other components are the same as those of the eleventh embodiment.

In the figure, it is possible to provide outbound service using the automatic calling control device 320 and the PBX information collecting and routing control device 322 at either of two call centers 110. The call centers 110 are not limited to two in number but may be more than two.

In addition, either of these call centers 110 is located at a site different from that of the automatic calling control device 320 and the PBX information collecting and routing control device 322. Therefore, either of them is a remote agent.

Alternatively, the automatic calling control device 320 and the PBX information collecting and routing control device 322 may be located at the same site as either of the call centers 110 together therewith. In this case, call centers other than this call center 110 serve as remote agents.

Furthermore, in this embodiment, the home agent device 200 is a type of a remote agent and attended basically by one operator such as a person working at home as a remote operator. However, the home agent device 200 may be attended by several persons. Incidentally, as the home agent device 200, it is possible to use those described above in FIGS. 16 to 18.

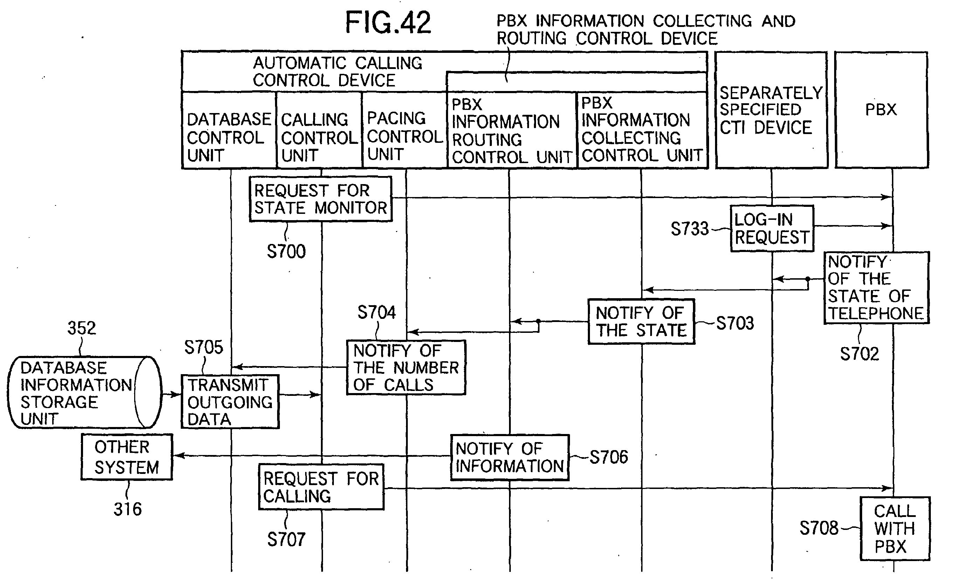

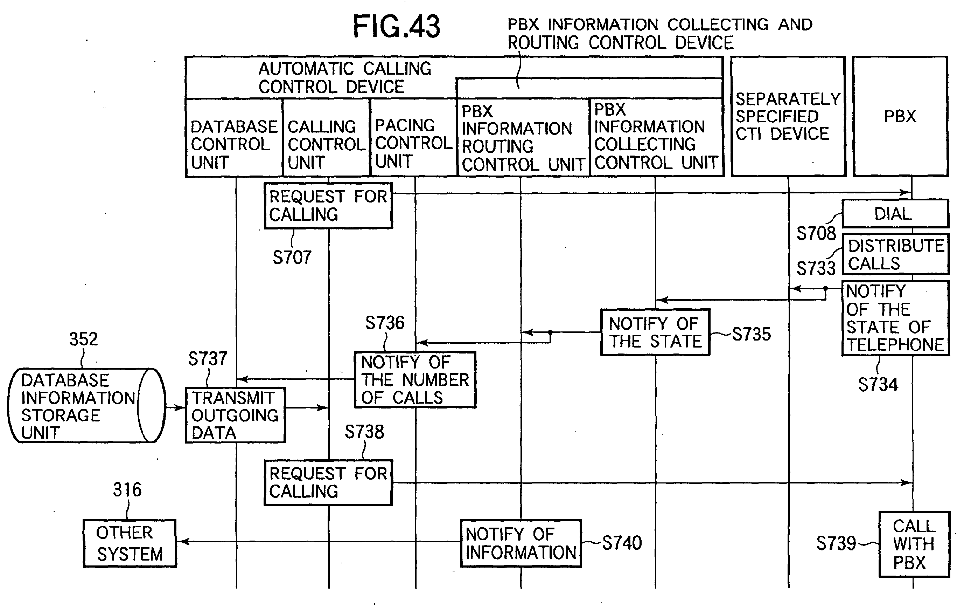

FIG. 42 is a sequence diagram illustrating a working example in the aforementioned ninth to eleventh embodiments, the thirteenth embodiment, and the aforementioned twelfth embodiment in which an automatic calling function is additionally provided. FIG. 43 is another sequence diagram to be continued from FIG. 42.

First, in step S700 of FIG. 42, the calling control unit 344 makes a request of the PBX 116 for monitoring the status of all the telephones 112 registered in the separately specified CTI device 310. In addition, when the operator assigned to the telephone 112 and the operator terminal 114 logs in to the operator terminal 114, the information regarding the logging-in activity is transmitted from the operator terminal 114 to the separately specified CTI device 310. Then, in step S701, the separately specified CTI device 310 makes a log-in request of the PBX 116.

Then, in step S702, the separately specified CTI device 310 and the PBX information collecting control unit 332 built in the PBX information collecting and routing control device 322 are notified of the state of the telephone 112 which has made the log-in request. In addition, in step S703, information on the notification is sent to the PBX information routing control unit 334 built in the PBX information collecting and routing control device 322 and to the pacing control unit 342.

In step S704, in accordance with the information on the notification acquired from the PBX information collecting and routing control device 322, the process determines the number of operators which have logged on but are not engaged in neither inbound service nor outbound service. Based on the number of operators, the number of operators is multiplied by a predetermined coefficient for example, to determine the number of calls to be automatically called. In addition, in step S704, the number of calls is sent to the database control unit 350.

In step S705, the database control unit 350 extracts outgoing information for customers corresponding in number to the calls from the database information storage unit 352. The outgoing information is sent to the calling control unit 344. In step S707, the calling control unit 344 makes a calling request of the PBX 116 in response to an outgoing call to each customer. Then, in step S708, in accordance with the calling request, the PBX 116 dials to prompt the public switched telephone network 101 to place a call to a customer.

Incidentally, when the state of the telephone 112 connected to the PBX 116 or the PBX 116 itself has changed, for example, in step S706, the other system 316 is notified of information indicative of the change in state as appropriate.

Incidentally, steps S707 and 708 of FIG. 42 are also illustrated in FIG. 43. In addition, the steps subsequent to the step S708 are as shown in FIG. 43.

When the call has been connected to the customer, in step S733 of FIG. 43 subsequent to step S708, the separately specified CTI device 310 distributes the connected call to the telephone 112 of a logged-on operator. Then, the connected call arrives at the telephone 112. In addition, in step S734, the separately specified CTI device 310 and the PBX information collecting control unit 332 built in the PBX information collecting and routing control device 322 are notified of the state of the telephone 112 that has been changed by the call connected. In addition, in step S735, the PBX information routing control unit 334 built in the PBX information collecting and routing control device 322 and the pacing control unit 342 are notified of the information notified.

Here, when the connected call has been distributed in step S733 and the state has been notified in step S734, the call having arrived at the telephone 112 is controlled by the separately specified CTI device 310 as shown by symbol F1 in the figure. That is, the calling control unit 344 controls the making a call, while once the call is connected, the separately specified CTI device 310 controls the connected call. For example, after the call has been connected, the separately specified CTI device 310 can forward the call to an intra-office telephone 112 that is switched by the PBX 116 or even to an extra-office telephone via the public switched telephone network 101.

In step S736, as in step S704, the number of calls to be automatically made is calculated. In addition, in step S736, the number of calls is sent to the database control unit 350.

In step S737, the database control unit 350 extracts outgoing information for customers corresponding in number to the calls from the database information storage unit 352. The outgoing information is sent to the calling control unit 344. In step S738, the calling control unit 344 makes a calling request of the PBX 116 in response to an outgoing call to each customer. Then, in step S739, in accordance with the calling request, the PBX 116 dials to prompt the public switched telephone network 101 to place a call to a customer.

Incidentally, suppose the state of the telephone 112 connected to the PBX 116 or the PBX 116 itself has changed. In this case, for example, in step S740, the other system 316 is notified of information indicative of the change in state as appropriate.

As described above, according to the ninth to thirteenth embodiments, the eighth to tenth inventions of the present application is effectively applicable. Accordingly, the degree of freedom in combination of facilities utilized in a call center can be improved, thereby facilitating the installation of new facilities or changing the layout of facilities. This can facilitate utilizing existing facilities in combination with newly introduced facilities when new functions are added to the call center, thereby reducing the amount of newly added facilities by making effective use of the existing facilities. It is thereby made possible to reduce the overall cost of operating the call center.

### INDUSTRIAL APPLICABILITY

According to the present invention, it is possible to improve the operation efficiency of the call center and reduce the cost of operating the call center.

## Claims

1. A multi-call-center operations method **characterized in that**
across a plurality of call centers where a plurality of operators are in charge of outbound service for handling outgoing calls to customers and inbound service for handling incoming calls from customers, number of operators in charge of outbound service at each call center is centrally controlled at one operator management unit, and
the operator management unit instructs each call center to increase or decrease the number of operators in charge of the outbound service.

2. The multi-call-center operations system according to claim 1, wherein
a predictive calling function available irrespective of a type of a local switching system provided at each of the call centers is operated in the call centers.

3. The multi-call-center operations method according to claim 1, wherein
across a plurality of target call centers, at least a part of information regarding a customer to be handled in outbound service and inbound service including at least a name of the customer and a telephone number of the customer is to be collectively managed.

4. The multi-call-center operations method according to claim 3, wherein
customers to be handled in outbound service and included in customer information are assigned to a respective call center, in consideration of toll charge from a call center to a customer, and
the customer information regarding an assigned customer can be referenced at a call center having the customer information assigned thereto.

5. A multi-call-center operations system **characterized by** comprising
an operator number management table for storing number of operators in charge of outbound service at each call center, the number of operators being received from a plurality of call centers where a plurality of the operators are in charge of outbound service for handling outgoing calls to customers and inbound service for handling incoming calls from customers, and
a collective operator management device for determining an increase or a decrease in the number of operators in charge of outbound service at each of the call centers to transmit a resulting determination to an associated call center.

6. A remote agent operations method **characterized in that**
a telephone for enabling calls via a public switched telephone network and a computer device connectable to a wide area network are located at a remote agent,
if the telephone can be used to service a customer, a remote operator at a remote agent logs in to a remotely located Web server device,
then, to provide outbound service, a call connected to a customer called using an automatic dialer device is connected to the telephone, and
customer information regarding the connection is forwarded to the computer device to indicate the customer information to the remote operator.

7. The remote agent operations method according to claim 6, wherein
a program, operated in the computer device, for use with a logging-in activity and for displaying the customer information is downloaded from the Web server device.

8. A remote agent device **characterized by** comprising
a telephone for allowing a remote operator at a remote agent to service a customer via a public switched telephone network by placing a call using a dialer device to provide outbound service, and
a computer device for use with a logging-in activity to a remotely located Web server device and for receiving customer information regarding a customer to be serviced from a remote location for display in order to provide the service, the computer device being able to connect to a wide area network, wherein
the remote agent device is located at the remote agent.

9. The remote agent device according to claim 8, whrein the telephone is implemented by
a voice call interface device, incorporated in the computer device, for connecting to the public switched telephone network, and
a headset to be put on a head of a remote operator and connected to the voice call interface device, the headset comprising a microphone device for use with an outgoing call to a customer and a loudspeaker device for use with an incoming call from the customer.

10. The remote agent device according to claim 9, wherein the telephone is an Internet telephone.

11. A remote call center apparatus wherein
a local switching system, a telephone connected to the local switching system, and an operator terminal operated by a human operator are prepared at each of a plurality of call centers, and
an automatic dialer device at one location can simultaneously provide outgoing calls to each of the plurality of call centers via a wide area network.

12. A call center operations method **characterized in that**,
with at least either an extension number of a respective telephone connected to a PBX or an ACD number managed by the PBX being pre-registered, a PBX information collecting and routing control device for receiving from the PBX and collecting at least either information indicative of a state of a telephone connected to the PBX or information indicative of a state of an ACD queue is used, and
if at least either the state of the telephone or the state of the ACD queue has changed, the PBX information collecting and routing control device sends a change-of-state notification indicative of the change to other external device.

13. The call center operations method according to claim 12, wherein
using a CTI device for forwarding a connected call by controlling the PBX and for providing information regarding the connected call for an operator using a telephone connected to the PBX, and
using a calling control unit for giving the PBX a command for providing an outgoing call to a called telephone number stored in a database in accordance with the change-of-state notification,
the calling control unit controls the outgoing call, and when once the call is connected, the CTI device controls the connected call.

14. The call center operations method according to claim 13, wherein
software used for connection with the PBX and included in a configuration of the PBX information collecting and routing control device, and software used for connection with the PBX and included in a configuration of the calling control unit are implemented in the form of a module, respectively.

15. A call center operations apparatus, **characterized by** comprising
a PBX information collecting and routing control device, with an extension number of a respective telephone connected to a PBX being pre-registered, for receiving information indicative of a state of a telephone from the PBX and for sending a change-of-state notification indicative of the change if the state of the telephone has changed,
a calling control unit for giving the PBX a command for providing an outgoing call to a called telephone number stored in a database in accordance with the change-of-state notification, and
a CTI device for forwarding a connected call by controlling the PBX and for providing information regarding the connected call for an operator using a telephone connected to the PBX.

16. A computer readable storage medium having a computer program stored thereon, the computer program for implementing the collective operator management device set forth in claim 5, the remote agent device set forth in claim 8, the remote call center apparatus set forth in claim 11, or the call center operations apparatus set forth in claim 15.
